(19) Europäisches Patentamt
European Patent Office
Office européen des brevets

(11) **EP 4 474 883 A1**

(12) **EUROPEAN PATENT APPLICATION**
published in accordance with Art. 153(4) EPC

(43) Date of publication:
**11.12.2024 Bulletin 2024/50**

(51) International Patent Classification (IPC):
*G02B 13/18* (2006.01)

(21) Application number: 23778307.1

(22) Date of filing: **29.03.2023**

(52) Cooperative Patent Classification (CPC):
G02B 13/18

(86) International application number:
**PCT/CN2023/084769**

(87) International publication number:
**WO 2023/185942 (05.10.2023 Gazette 2023/40)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **31.03.2022 CN 202210334478**

(71) Applicant: **Huawei Technologies Co., Ltd.
Shenzhen, Guangdong 518129 (CN)**

(72) Inventors:
• **ZHANG, Le
Shenzhen, Guangdong 518129 (CN)**
• **YE, Haishui
Shenzhen, Guangdong 518129 (CN)**
• **NIU, Yajun
Shenzhen, Guangdong 518129 (CN)**
• **WANG, Heng
Shenzhen, Guangdong 518129 (CN)**
• **LU, Jianlong
Shenzhen, Guangdong 518129 (CN)**
• **TANG, Wei
Shenzhen, Guangdong 518129 (CN)**
• **LI, Dengfeng
Shenzhen, Guangdong 518129 (CN)**
• **BIAN, Xinxiu
Shenzhen, Guangdong 518129 (CN)**

(74) Representative: **Thun, Clemens
Mitscherlich PartmbB
Patent- und Rechtsanwälte
Karlstraße 7
80333 München (DE)**

(54) **TELEPHOTO LENS, CAMERA MODULE AND ELECTRONIC DEVICE**

(57) A telephoto lens (1), a camera module (10), and an electronic device (100) are provided. The telephoto lens (1) includes a first lens (L1), a second lens (L2), a third lens (L3), and a fourth lens (L4) that are arranged from an object side to an image side. There is a spacing T12 between the first lens (L1) and the second lens (L2). There is a spacing T23 between the second lens (L12) and the third lens (L3). There is a spacing T34 between the third lens (L3) and the fourth lens (L4). The spacing T12, the spacing T23, and the spacing T34 satisfy T34>T12 and T34>T23. A total track length TTL of the telephoto lens (1) and the spacing T34 satisfy 5<TTL/T34<20. A body height of the telephoto lens (1) is small, so that a compressed height of the camera module (10) is small, and occupied space is reduced. This facilitates miniaturization, lightening, and thinning of the electronic device (100).

FIG. 3A

EP 4 474 883 A1

## Description

This application claims priority to Chinese Patent Application No. 202210334478.2, filed with the China National Intellectual Property Administration on March 31, 2022 and entitled "TELEPHOTO LENS, CAMERA MODULE, AND ELECTRONIC DEVICE", which is incorporated herein by reference in its entirety.

## TECHNICAL FIELD

This application relates to the field of image shooting device technologies, and in particular, to a telephoto lens, a camera module, and an electronic device.

## BACKGROUND

A body height of an existing telephoto lens is large, and therefore a height of a camera module is large. In the conventional technology, the height of the camera module is reduced usually in a manner of a periscope module. However, this increases an area occupied by the camera module. Consequently, a size of an electronic device is increased, which is unfavorable to miniaturization, lightening, and thinning of the electronic device.

## SUMMARY

This application provides a telephoto lens, a camera module, and an electronic device. A body height of the telephoto lens is small, so that a compressed height of the camera module is small, and occupied space is reduced. This facilitates miniaturization, lightening, and thinning of the electronic device.

According to a first aspect, this application provides a telephoto lens. The telephoto lens includes a first lens, a second lens, a third lens, and a fourth lens that are arranged from an object side to an image side. There is a spacing T12 between the first lens and the second lens. There is a spacing T23 between the second lens and the third lens. There is a spacing T34 between the third lens and the fourth lens. The spacing T12, the spacing T23, and the spacing T34 satisfy T34>T12 and T34>T23. A total track length TTL of the telephoto lens and the spacing T34 satisfy

In this application, the spacing T34 between the third lens and the fourth lens is greater than the spacing between other adjacent lenses in the four lenses, and 5<TTL/T34<20 is set. In this way, the spacing T34 between the third lens and the fourth lens is short, and consequently a body height of the telephoto lens is small. When the telephoto lens is in a compressed state, an overall height of the camera module is small, and the camera module occupies small space in an internal cavity of an entire electronic device. This facilitates storage and better use in a thin electronic device.

In some possible implementations, a focal length f1 of the first lens and the spacing T34 satisfy 6<f1/T34<11.

In this implementation, a ratio of the spacing T34 between the third lens and the fourth lens to the focal length f1 of the first lens is short, so that the spacing T34 between the third lens and the fourth lens is short. In this way, the body height of the telephoto lens is small, and consequently a compressed height of the camera module is reduced.

In some possible implementations, the total track length TTL of the telephoto lens and the spacing T12 satisfy 50<TTL/T12<150, and/or the total track length TTL of the telephoto lens and the spacing T23 satisfy 15<TTL/T23<30.

In this implementation, in this application, 50<TTL/T12<150 is set, and/or 15<TTL/T23<30 is set. In this way, the spacing T12 between the first lens and the second lens and/or the spacing T23 between the second lens and the third lens are/is short. This reduces the body height of the telephoto lens, and further reduces the compressed height of the camera module.

In some possible implementations, an equivalent focal length of the telephoto lens is greater than or equal to 60 mm and less than or equal to 100 mm, and an f-number Fno of the telephoto lens satisfies 1.0≤Fno≤2.8.

In this implementation, the telephoto lens has a long focal length and a large aperture. In this way, a depth of field of the telephoto lens is shallow, and during photographing, a center is clear, a background is blurred, and therefore a theme is prominent. Consequently, a special artistic effect is easily achieved.

In some possible implementations, the equivalent focal length of the telephoto lens is greater than or equal to 80 mm and less than or equal to 90 mm, and the f-number Fno of the telephoto lens satisfies 1.6≤Fno≤1.8 or 1.8<Fno≤2.0.

In this implementation, the equivalent focal length of the telephoto lens belongs to a range of a 90 mm focal length. A depth of field of a lens with a focal length in the range of the 90 mm focal length is shallow, which helps more easily achieve an imaging effect with a clear center and a blurred background. In addition, when the lens with the focal length in the range of the 90 mm focal length is used to photograph a portrait, the face of a person is slightly distorted and therefore a proportion of the head of the person is approximate to that observed by a human eye. This avoids distortion during portrait photographing at a short distance, and is applicable to portrait photographing. Herein, 1.6≤Fno≤1.8 or 1.8<Fno≤2.0 is set. In this way, an aperture size of the telephoto lens matches the range of the 90 mm focal length, to achieve a better imaging effect is achieved.

In some possible implementations, an image height ImgH of the telephoto lens satisfies 2.5 mm≤ImgH≤8 mm.

In this implementation, the telephoto lens has a small field of view and a large target surface size, to have a strong distant-scene photographing capability and high imaging quality in distant-scene photographing.

In some possible implementations, an effective focal length EFL of the telephoto lens satisfies 6.94 mm≤EFL≤9.25 mm, 9.25 mm<EFL≤33.28 mm, or 33.28 mm<EFL≤37 mm.

It may be understood that the effective focal length EFL is related to the equivalent focal length and the image height ImgH. In this implementation, the telephoto lens has a long focal length and a large target surface, and has a better imaging effect.

In some possible implementations, a field of view FOV of the telephoto lens satisfies 15°<FOV≤28° or 28°<FOV≤50°.

In this implementation, the field of view FOV of the telephoto lens matches a long focal length, a large aperture, and a large target surface, to obtain a better imaging effect.

In some possible implementations, a back focal length BFL of the telephoto lens satisfies BFL≥4 mm.

In this implementation, when the telephoto lens is in a pop-up state, the back focal length BFL between the telephoto lens and a light filter is long, so that the telephoto lens has a sufficiently long back focal length BFL. In this way, the back focal length BFL does not need to be considered during design of the telephoto lens, a large aperture and a large target surface are more easily implemented, and design difficulty is reduced.

In some possible implementations, the telephoto lens includes an image-end lens closest to the image side. Focal power of the first lens is positive. Focal power of the second lens is negative. Focal power of the image-end lens is negative. At least one lens whose focal power is positive included between the second lens and the image-end lens.

In this implementation, the first lens has positive focal power, and the second lens has negative focal power, so that a body height of the telephoto lens is small. This facilitates miniaturization of the camera module. In addition, the second lens and the image-end lens that are located on an image side of the first lens have negative focal power, so that an incident angle of a beam passing through the telephoto lens and being emitted into a photosensitive element can be reduced, and a better imaging effect can be achieved. In addition, the second lens and the image-end lens cooperate with each other to form a positive-negative lens cooperation structure. In this way, problems such as a color difference and aberration can be better resolved, and imaging quality can be improved.

In addition, the lens is disposed between the second lens and the image-end lens. This increases a specification of the telephoto lens and increases complexity of an optical path to control a transmission path of a ray more accurately, thereby improving the imaging effect. Through appropriate combination of the focal power and surface shapes of lenses of the optical lens, a low-order aberration of the telephoto lens 1 can be effectively reduced, and tolerance sensitivity is reduced.

In some possible implementations, the telephoto lens further includes a fifth lens located on an image side of the fourth lens. The fifth lens is the image-end lens. Focal power of the third lens is positive. Focal power of the fourth lens is positive.

In this implementation, the first lens closest to the object side in the five lenses of the telephoto lens is a main lens, and other lenses of the telephoto lens are configured to adjust parameters such as the focal length of the first lens, so that the telephoto lens obtains preset optical performance. The telephoto lens adjusts the main lens by using four lenses. An optical path is simple, design difficulty of each lens is low, and thicknesses of the lenses used for adjustment are large, which facilitates processing. In addition, a body height of the telephoto lens is small, so that the camera module obtains a small compressed height.

In some possible implementations, the telephoto lens further includes a fifth lens and a sixth lens that are located on an image side of the fourth lens. The sixth lens is the image-end lens. Focal power of the third lens is negative. Focal power of the fourth lens is positive, and focal power of the fifth lens is positive.

In this implementation, the first lens closest to the object side in the six lenses of the telephoto lens is a main lens, and other lenses of the telephoto lens are configured to adjust parameters such as the focal length of the first lens, so that the telephoto lens obtains preset optical performance. In this embodiment, the telephoto lens adjusts the main lens by using five lenses. An optical path is simple, design difficulty of each lens is low, and thicknesses of the lenses used for adjustment are large, which facilitates processing. In addition, a body height of the telephoto lens is small, so that the camera module obtains a small compressed height.

In some possible implementations, the telephoto lens further includes a fifth lens, a sixth lens, and a seventh lens that are located on an image side of the fourth lens. The seventh lens is the image-end lens. Focal power of the third lens is negative. Focal power of the fourth lens is positive. Focal power of the fifth lens is negative. Focal power of the sixth lens is positive.

In this implementation, the first lens closest to the object side in the seven lenses of the telephoto lens is a main lens, and other lenses of the telephoto lens are configured to adjust parameters such as the focal length of the first lens, so that the telephoto lens obtains preset optical performance. The telephoto lens adjusts the main lens by using six lenses. An optical path is complex, and a specification of the telephoto lens is high, to control a transmission path of a ray more accurately, thereby improving the imaging effect. In addition, a body height of the telephoto lens is small, so that the camera module obtains a small compressed height.

In some possible implementations, the telephoto lens further includes an aperture diaphragm, and the aperture is mounted on the first lens.

In this implementation, an aperture adjustment effect of the aperture diaphragm is better, and imaging quality of the telephoto lens can be improved.

In some possible implementations, an optical surface of at least one lens of the telephoto lens is an aspheric surface.

In this implementation, the optical surface of an aspheric shape has different focal lengths in a region from a near axis to an outer field of view, so that an imaged picture has more balanced image quality, and/or an optical surface of at least one lens of the telephoto lens may be a free-form curved surface to correct an aberration.

In some possible implementations, an optical surface of at least one lens of the telephoto lens forms a diffraction grating structure.

In this implementation, the diffraction grating structure is appropriately disposed, so that a chromatic aberration can be reduced, and a volume of the telephoto lens can be reduced.

According to a second aspect, this application further provides a camera module. The camera module includes a photosensitive element and a telephoto lens. The photosensitive element is located on an image side of the telephoto lens. The telephoto lens has a compressed state and a pop-up state. When the telephoto lens is in the compressed state, the telephoto lens has a compressed total track length cTTL. When the telephoto lens is in the pop-up state, the telephoto lens has a total track length TTL. The compressed total track length cTTL and the total track length TTL satisfy $0.5 \leq cTTL/TTL \leq 1$.

A compressed height of the camera module provided in this application is small, and occupied space is reduced. This facilitates miniaturization, lightening, and thinning of an electronic device.

In some possible implementations, a size of the photosensitive element is 1/3.6 inches, 1/2.5 inches, 1/2 inches, or 1 inch.

In this implementation, the telephoto lens has a large target surface. This can increase a pixel value and a photosensitive capability in imaging of the camera module, and can improve image quality of the electronic device.

In some possible implementations, the camera module further includes a pop-up apparatus and a housing. The telephoto lens is movably mounted on the housing, and the pop-up apparatus is configured to drive the telephoto lens to move relative to the housing, to switch the telephoto lens between the compressed state and the pop-up state.

In this implementation, a pop-up storage manner is used for the camera module. In this way, the telephoto lens pops up only when the camera module needs to implement a photographing function. This effectively resolves a problem that a height of the camera module is large because a back focal length BFL of the lens is long.

According to a third aspect, this application further provides an electronic device. The electronic device includes an image processor and a camera module. The image processor and the camera module are in a communication connection. The image processor is configured to: obtain an image signal from the camera module and process the image signal.

A compressed height of the camera module provided in this application is small, and occupied space is reduced. This facilitates miniaturization, lightening, and thinning of an electronic device.

## BRIEF DESCRIPTION OF DRAWINGS

FIG. 1 is a diagram of a structure of an electronic device according to some embodiments of this application;
FIG. 2A is a diagram of an internal structure of a camera module shown in FIG. 1 according to some embodiments;
FIG. 2B is a diagram of an internal structure of the camera module shown in FIG. 2A in a pop-up state;
FIG. 3A is a diagram of a part of a structure of the camera module shown in FIG. 2A in a compressed state;
FIG. 3B is a diagram of the part of the structure of the camera module shown in FIG. 3A in a pop-up state;
FIG. 4A is a diagram of an optical path obtained when a part of a structure of a camera module focuses on a distant scene according to a first embodiment of this application;
FIG. 4B is a diagram of a simulation effect of a telephoto lens that focuses on the distant scene and that is shown in FIG. 4A;
FIG. 5A is a diagram of an optical path obtained when a part of a structure of a camera module focuses a distant scene according to a second embodiment of this application;
FIG. 5B is a diagram of a simulation effect of a telephoto lens that focuses the distant scene and that is shown in FIG. 5A;
FIG. 6A is a diagram of an optical path obtained when a part of a structure of a camera module focuses on a distant scene according to a third embodiment of this application; and

FIG. 6B is a diagram of a simulation effect of a telephoto lens that focuses on the distant scene and that is shown in FIG. 6A.

## DESCRIPTION OF EMBODIMENTS

For ease of understanding, English abbreviations and related technical terms used in embodiments of this application are first explained and described below.

Focal power (focal power) is equal to a difference between convergence of an image-space beam and convergence of an object-space beam, and represents a capability of an optical system to refract rays.

For a lens or a lens assembly with positive focal power, the lens or lens assembly has a positive focal length, and has an effect of converging rays.

For a lens or a lens assembly with negative focal power, the lens or lens assembly has a negative focal length, and has an effect of diverging rays.

A focal length (focal length) is a measure of how powerfully an optical system converges or diverges light, and indicates, when a clear picture of a scenic object at an infinite distance is formed on an image-space focal plane by using a lens or a lens assembly, a vertical distance from an optical center of the lens or the lens assembly to the image-space focal plane. From a practical perspective, the focal length may be understood as a distance from a center of a lens to a plane when an object is at an infinite distance. For a prime lens, a location of an optical center of the prime lens is fixed. For a telephoto lens, a change in an optical center of a lens causes a change in a focal length of the lens.

An effective focal length (effective focal length, EFL) of a lens is a distance from a center of the lens to a focal point.

For an equivalent focal length of a lens, an angle of view of imaging on photosensitive elements of different sizes is converted into an optical lens focal length corresponding to the same angle of view of imaging on a 135 camera module. The focal length obtained through conversion is a 135 equivalent focal length, namely, the equivalent focal length. In other words, the 135 camera module is used as a standard, and a focal length of a camera module of a non-135 specification is converted into a focal length of the 135 camera module. The equivalent focal length=an effective focal length of the optical lens*a focal length coefficient (or a focal length multiple), where the focal length coefficient is a ratio of a diagonal length of a sensing element of the camera module of the non-135 specification to a focusing line length of a photosensitive element of the camera module of the 135 specification. Therefore, the equivalent focal length=the effective focal length of the optical lens*the focusing line length of the photosensitive element of the camera module of the 135 specification/2 times an image height. For example, if a physical focal length of the optical lens=14.8 mm, a diagonal length of the sensing element of the camera module of the non-135 specification is 3.5 mm, and a diagonal length of the photosensitive element of the camera module of the 135 specification is 43.27 mm, the equivalent focal length=14.8*43.27/(2*3.5)≈91 mm.

For an object-side surface, with a lens as a boundary, a side on which a photographed object is located is an object side, and a surface of the lens close to the object side is referred to as the object-side surface.

For an image-side surface, with a lens as a boundary, a side on which an image of a photographed object is located is an image side, and a surface of the lens close to the image side is referred to as the image-side surface.

A back focal length BFL (back focal length, BFL), also referred to as a back focal distance, is a distance from a vertex of an image-side surface of a lens closest to an image side to a rear focus point in an optical system.

An object distance is a distance between a photographed object and an object side of a lens.

An aperture diaphragm (aperture diaphragm) is an apparatus configured to control an amount of light reaching a light-sensitive surface after rays pass through a lens, and is usually located in the lens.

An f-number, also referred to as an F-number (Fno), is a relative value (a reciprocal of a relative aperture) obtained by dividing a focal length of a lens by an entrance pupil diameter of the lens. A smaller f-number indicates a larger luminous flux within a same unit time. A larger f-number indicates a shallower depth of field, and background content in image shooting is blurred, with an effect similar to that of a telephoto lens.

A total track length (total track length, TTL) is a total length from a surface of a lens closest to an object side to an imaging plane. The TTL is a main factor forming a height of a camera.

An imaging plane is a carrier plane that is located on image sides of all lenses of a telephoto lens and on which an image is formed after rays sequentially pass through the lenses of the telephoto lens.

A field of view (field of view, FOV) is also referred to as an angle of view. In an optical instrument, an angle formed by a lens of the optical instrument as a vertex and two edges of a maximum range in which an object image of a photographed object can pass through the lens is referred to as the field of view.

An optical axis is an axis that runs vertically through the center of a lens. An optical axis of a lens is an axis that passes through centers of lenses of the lens. When rays parallel to the optical axis enter a convex lens, an ideal convex lens converges all rays at one point behind the lens. This point at which all the rays converge is a focal point.

The focal point is a point at which parallel rays converge after being refracted by a lens or a lens assembly.

An image-space focal plane, also referred to as a rear focal plane or a second focal plane, is a flat surface that passes through an image-space focal point (also referred to as a rear focal point or a second focal point) and that is perpendicular to an optical axis of a system.

An Abbe number, namely, a dispersion coefficient, is a difference ratio of refractive indexes of an optical material at different wavelengths, and represents a degree of dispersion of the material.

Aberration: A paraxial region of an optical system has the properties of an ideal optical system. A paraxial ray emitted from a point on an object intersects an image plane at one point (namely, a paraxial image point). However, rays actually passing through different apertures of a lens can hardly perfectly intersect at one point. Instead, there are deviations from the position of the paraxial image point. These deviations are collectively referred to as aberrations.

An axial chromatic aberration (longitudinal spherical aber) is also referred to as a longitudinal chromatic aberration or a positional chromatic aberration or an axial chromatic aberration. A beam of rays parallel to an optical axis converges at different positions after passing through a lens. This aberration is referred to as a positional chromatic aberration or an axial chromatic aberration. This is because positions of images formed by the lens for light of different wavelengths are different, so that image-space focal planes of light of different colors cannot overlap during final imaging, and polychromatic light is scattered to form dispersion.

A distortion (distortion), also referred to as an anamorphosis, is a degree at which an image formed by an optical system for an object is distorted relative to the object. A distortion is caused because a height of a point at which chief rays with different fields of view intersect a Gaussian image plane after the chief rays pass through the optical system is not equal to an ideal image height due to impact of a diaphragm spherical aberration, and a difference between the two heights is a distortion. Therefore, a distortion only changes an imaging position of an off-axis object point on an ideal plane, so that a shape of an image is distorted, but definition of the image is not affected.

An image height (Image Height, ImgH) indicates a half of a diagonal length of an effective pixel region on a photosensitive chip, namely, an image height of an imaging plane.

For astigmatism (astigmatism), because an object point is not on an optical axis of an optical system, a beam emitted by the object point has an oblique angle to the optical axis. After the beam is refracted by a lens, convergence points of a meridian pencil and a sagittal pencil are not a same point. That is, the beam cannot be focused at one point, and imaging is not clear, resulting in astigmatism. The meridian pencil and the sagittal pencil are names of beams in two vertical planes in a rotationally symmetrical optical system.

Curvature of field (curvature of field) indicates a difference between a position of the clearest image point in a non-central field of view and a position of the clearest image point in a central field of view in an optical axis direction when a ray passes through an optical length. When curvature of field exists on a lens, an intersection of an entire beam does not coincide with an ideal image point. Although a clear image point can be obtained at each specific point, an entire image plane is a curved surface.

The following describes technical solutions of embodiments of this application with reference to the accompanying drawings. In the descriptions of embodiments of this application, unless otherwise stated, "/" represents "or". For example, A/B may represent A or B. In this specification, "and/or" merely describes an association relationship between associated objects and represents that three relationships may exist. For example, A and/or B may represent the following three cases: Only A exists, both A and B exist, and only B exists. In addition, in the descriptions of embodiments of this application, "a plurality of" means two or more than two.

In the following, terms such as "first" and "second" are used only for description purposes, and cannot be understood as implying or implying relative importance or implicitly indicating a quantity of indicated technical features. Therefore, a feature limited by "first" or "second" may explicitly or implicitly include one or more features.

An embodiment of this application provides an electronic device. The electronic device may be an electronic product that has an image shooting or a photographing function, for example, a mobile phone, a tablet, a notebook computer, a television, a vehicle-mounted device, a wearable device, or a video surveillance device. The wearable device may be a smart band, a smart watch, a wireless headset, augmented reality (augmented reality, AR) glasses, an augmented reality helmet, virtual reality (virtual reality, VR) glasses, a virtual reality helmet, or the like. In embodiments of this application, an example in which the electronic device is a mobile phone is used for description.

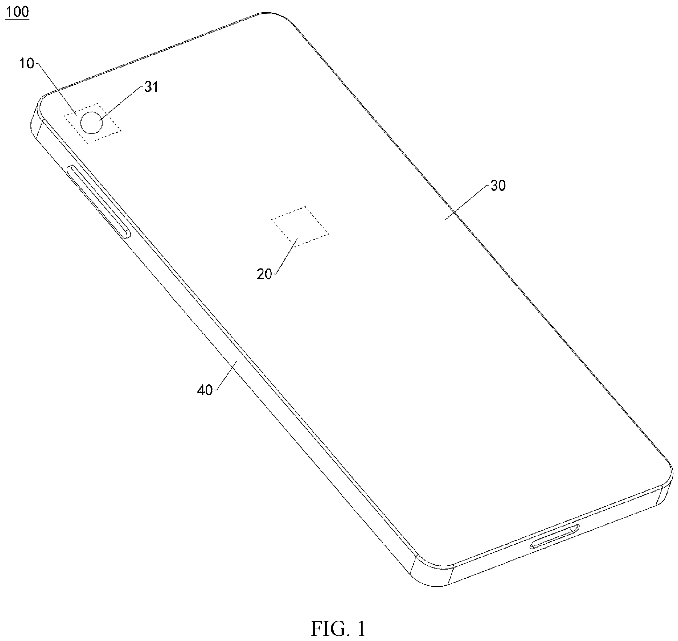

FIG. 1 is a diagram of a structure of an electronic device 100 according to some embodiments of this application.

As shown in FIG. 1, in some embodiments, the electronic device 100 includes a camera module 10, an image processor 20, a rear cover 30, a frame 40, and a display (not shown in the figure). The rear cover 30 and the display are fastened opposite to each other to two sides of the frame 40, and the rear cover 30, the display, and the frame 40 jointly enclose an internal cavity of the electronic device 100. The display may be configured to display an image, and may further integrate a touch control function to implement human-computer interaction. The camera module 10 is accommodated in an internal cavity of the entire device. The camera module 10 is configured to: collect optical information outside the electronic device 100, and form a corresponding image signal. The image processor 20 and the camera module 10 are in a communication connection. The image processor 20 is configured to: obtain an image signal from the camera module 10 and process the image signal. The communication connection between the camera module 10 and the image processor 20 may be implemented in an electrical connection manner, for example, cabling, or in a coupling manner, to implement data transmission. It can be understood that the communication connection between the camera module 10 and the image processor 20 may alternatively be implemented in another manner that can implement data transmission.

In this embodiment, a camera hole 31 may be provided in the rear cover 30, the camera module 10 collects rays through the camera hole 31, and the camera module 10 may be used as a rear-facing camera of the electronic device 100. For example, the rear cover 30 may include a transparent lens, and the transparent lens is mounted on the camera hole 31, to allow rays to pass through, and can be dustproof and waterproof.

In some other embodiments, the camera module 10 may be used as a front-facing camera of the electronic device 100. For example, a transparent region may be provided on the display. The camera module 10 may collect optical information outside the electronic device 100 through the transparent region. In this embodiment, the camera module 10 is used as a front-facing camera module of the electronic device 100. In other words, the camera module 10 may be used as the rear-facing camera module of the electronic device 100, or may be used as the front-facing camera module of the electronic device 100. This is not strictly limited in embodiments of this application.

For example, as shown in FIG. 1, the camera module 10 of the electronic device 100 may be mounted at a first end of an upper part of the electronic device 100. The first end and a second end of the upper part are respectively located at the left end and the right end of the upper part.

In addition, a mounting position of the camera module 10 of the electronic device 100 in the embodiment shown in FIG. 1 is merely an example. The mounting position of the camera module 10 is not strictly limited in this application. In some other embodiments, the camera module 10 may also be mounted at another position of the electronic device 100. For example, the camera module 10 may be mounted in the middle of the upper part or at the second end of the upper part of the electronic device 100, or may be mounted in the middle, at the left end of a lower part, or at the right end of a lower part of the electronic device 100.

In some other embodiments, the electronic device 100 may further include a terminal body and an auxiliary component that can rotate or move relative to or be disassembled from the terminal body, and the camera module 10 may alternatively be disposed on the auxiliary component.

In some embodiments, the electronic device 100 may further include an analog-to-digital converter (also referred to as an A/D converter, which is not shown in the figure). The analog-to-digital converter is connected between the camera module 10 and the image processor 20. The analog-to-digital converter is configured to: convert an analog image signal generated by the camera module 10 into a digital image signal, and transmit the digital image signal to the image processor 20. Then, the digital image signal is processed by the image processor 20, to obtain a processed image signal. The processed image signal may be displayed as an image or a picture on the display.

In some embodiments, the electronic device 100 may further include a memory (not shown in the figure). The memory and the image processor 20 are in a communication connection, and the image processor 20 transmits a processed image signal to the memory. In this way, when an image needs to be viewed subsequently, the processed image signal can be found in the memory at any time and displayed on the display. In some embodiments, the image processor 20 further compresses a processed image signal, and then stores a compressed image signal in the memory to save memory space.

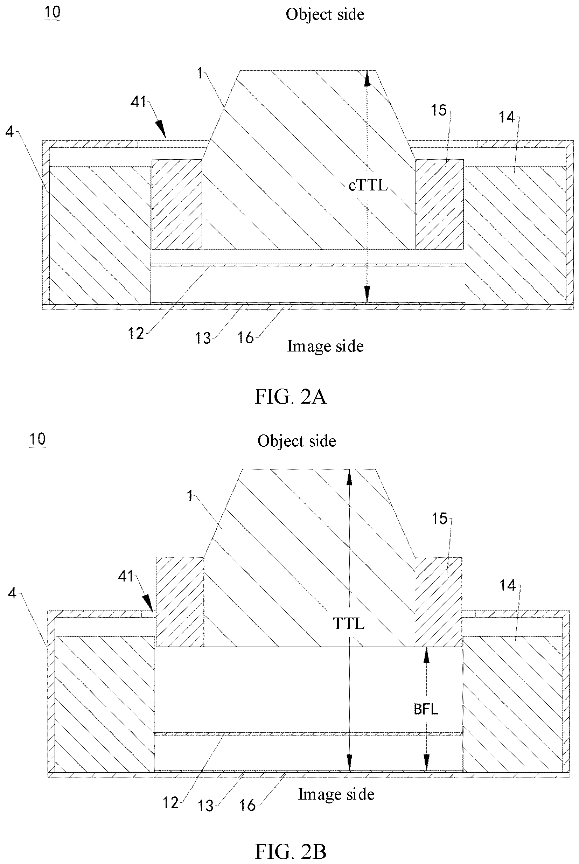

FIG. 2A is a diagram of an internal structure of the camera module 10 shown in FIG. 1 according to some embodiments. FIG. 2B is a diagram of the internal structure of the camera module 10 shown in FIG. 2A in a pop-up state.

For example, the camera module 10 may include a telephoto lens 1, a photosensitive element 13, a light filter 12, and a housing 4. Mounting space is provided in the middle of the housing 4. The telephoto lens 1 is movably mounted in the mounting space of the housing 4. The photosensitive element 13 and the light filter 12 are rigidly mounted in the mounting space of the housing 4. The light filter 12 is located on an image side of the telephoto lens 1. The photosensitive element 13 is located on an image side of the light filter 12. In this application, rays reflected by a photographed scenic object passes through the telephoto lens 1, and an optical image is generated and projected onto the photosensitive element 13.

In some embodiments, a through hole 41 may be provided on an object side of the housing 4, and the telephoto lens 1 may pop up from the through hole 41 to an outer side of the housing 4. In this application, a side on which the through hole 41 is located is the object side of the housing 4.

As shown in FIG. 2A, the camera module 10 may be in a compressed state. As shown in FIG. 2B, the camera module 10 may alternatively be in a pop-up state. When the camera module 10 is in the compressed state, a large part of a structure of the telephoto lens 1 is located on an inner side of the housing 4. In this way, a distance between the telephoto lens 1 and the light filter 12 is short, and an overall height of the camera module 10 is small. This reduces space occupied by the camera module 10, and facilitates lightening, thinning, and miniaturization of the electronic device 100. When the camera module 10 is in the pop-up state, the telephoto lens 1 pops up relative to the housing 4. In this way, a distance between the telephoto lens 1 and the light filter 12 is long, the telephoto lens 1 may be in a distant-scene photographing state, and therefore the telephoto lens 1 can move relative to the photosensitive element 13 to implement a focusing function.

In this application, a pop-up storage manner is used for the camera module 10. In this way, the telephoto lens 1 pops up only when the camera module 10 needs to implement a photographing function. This effectively resolves a problem that a height of the camera module 10 is large because a back focal length BFL of the lens is long.

It should be understood that, when the camera module 10 is in the compressed state, the telephoto lens 1 is correspondingly in the compressed state. When the camera module 10 is in the pop-up state, the telephoto lens 1 is correspondingly in the pop-up state.

In this embodiment, the telephoto lens 1 can pop up from the through hole 41 of the housing 4, so that the telephoto lens 1 has a large enough back focal length BFL. In this way, when the telephoto lens 1 is designed, other performance is not degraded because the back focal length BFL does not need to be considered. For example, there is no need to use a small aperture and a small target surface to reduce the back focal length BFL. Therefore, the telephoto lens 1 in this application has a large aperture and a large target surface while the height of the assembly is reduced. The large aperture enables the telephoto lens 1 to have a larger luminous flux, to improve photographing quality of the electronic device 100 in a low-luminance environment, for example, in a night mode. A pixel value and a photosensitive capability of imaging of the camera module 10 can be increased by using the large target surface, to improve image quality of the electronic device 100.

For example, as shown in FIG. 2A, when the camera module 10 is in the compressed state, the telephoto lens 1 has a compressed total track length cTTL. In this application, the compressed total track length cTTL is a distance between an image-side surface of the telephoto lens 1 and a photosensitive surface of the photosensitive element 13 when the telephoto lens 1 is in a compressed state. As shown in FIG. 2B, when the camera module 10 is in the pop-up state, the telephoto lens 1 has a total track length TTL. In this application, the total track length TTL is a distance between the image-side surface of the telephoto lens 1 and the photosensitive surface of the photosensitive element 13 when the telephoto lens 1 is in the pop-up state. In some embodiments, the compressed total track length cTTL and the total track length TTL may satisfy $0.5 \leq cTTL/TTL \leq 1$. For example, the compressed total track length cTTL may be equal to 0.6 or 0.8 times of the total track length TTL. A compressed height of the camera module 10 is related to the compressed total track length cTTL. In this application, the compressed total track length cTTL of the telephoto lens 1 is small. As a result, the compressed height of the camera module 10 provided in this application is small, and occupied space is reduced. This facilitates miniaturization, lightening, and thinning of the electronic device 100.

For example, the camera module 10 may further be provided with a pop-up apparatus 14. The pop-up apparatus 14 is connected to the telephoto lens 1, and may be configured to drive the telephoto lens 1 to move relative to the housing 4, to switch the telephoto lens 1 between the compressed state and the pop-up state. In some embodiments, the pop-up apparatus 14 may include a deformable structure, for example, a spring, a spring plate, and a memory metal part. The deformable structure may deform and store elastic potential energy when the telephoto lens 1 is in the compressed state. The deformable structure may further release elastic potential energy and generate elastic force. When being driven by the elastic force, the telephoto lens 1 may pop up relative to the housing 4 from the compressed state, and change to the pop-up state. In some other embodiments, the pop-up apparatus 14 may alternatively be a drive apparatus, for example, a motor. This is not limited in this application.

The camera module 10 may further include a circuit board 16, and the photosensitive element 13 may be fastened to the circuit board 16. A ray can pass through the telephoto lens 1 and illuminate the photosensitive element 13. For example, a working principle of the camera module 10 is as follows: Rays reflected by a photographed scenic object passes through the telephoto lens 1, and an optical image is generated and projected to the photosensitive element 13. The photosensitive element 13 converts the optical image into an electrical signal, namely, an analog image signal, and transmits the electrical signal to an analog-to-digital converter, to convert the electrical signal into a digital image signal and send the digital image signal to the image processor 20.

The photosensitive element 13 (also referred to as an image sensor) is a semiconductor chip, includes hundreds of thousands to millions of photodiodes on a surface, and generates a charge when being illuminated by light. The photosensitive element 13 may be a charge-coupled device (charge-coupled device, CCD), or may be a complementary metal-oxide semiconductor device (complementary metal-oxide semiconductor, CMOS). The charge-coupled device is made of a highly photosensitive semiconductor material, and can convert a ray into an electric charge. The charge-coupled device is constituted by many photosensitive units, usually including megapixels. When a surface of the charge-coupled device is illuminated by rays, each photosensitive unit reflects electric charges on a component. Signals generated by all photosensitive units are combined to form a complete picture. The complementary metal-oxide semiconductor device is a semiconductor mainly made by using two elements, namely, silicon and germanium, so that an N-type (negatively charged) semiconductor and a P-type (positively charged) semiconductor coexist on the complementary metal-oxide semiconductor device. A current generated by the two complementary effects may be recorded and decoded as a picture by a processing chip.

In some embodiments, the photosensitive element 13 may move on a plane perpendicular to a thickness direction of the camera module 10 or tilt relative to a thickness direction of the camera module 10, to implement image stabilization. In this case, the photosensitive element 13 does not have a capability of moving in a direction parallel to the thickness direction of the camera module 10, or has a tiny stroke far less than a focusing stroke, to reduce a thickness of the assembly. In some other embodiments, the photosensitive element 13 may alternatively be a fastened component.

For example, the telephoto lens 1 may be a prime lens, or may be a zoom lens. A focal length of the prime lens remains unchanged, which facilitates focusing. A focal length of the zoom lens changes, and the focal length of the zoom lens is adjusted based on a size of an object distance of a photographed object. The zoom lens may photograph an object in a range from a distant scene to a close scene. In this application, an example in which the telephoto lens 1 is a prime lens is used for description. Zoom and adaptation of an aperture to the zoom do not need to be considered. Therefore, the prime lens may be structurally simple have good sharpness and a good color of an image, and can also implement a large aperture at low costs to implement perfect out-of-focus blurring.

The telephoto lens 1 performs imaging mainly according to a refraction principle of a lens. To be specific, rays of a scenic object pass through the telephoto lens 1, and a clear picture is formed on an imaging plane. The picture of the scenic object is recorded by the photosensitive element 13 located on the imaging plane.

In some embodiments, an equivalent focal length of the telephoto lens 1 may be greater than or equal to 60 mm and less than or equal to 100 mm. For example, the equivalent focal length of the telephoto lens 1 may be 60 mm, 65 mm, 95 mm, or 100 mm. An f-number Fno of the telephoto lens 1 may satisfy $1.0 \leq Fno \leq 2.8$. For example, the f-number Fno of the telephoto lens 1 may be 1.2, 2.0, or 2.6. In this embodiment, the telephoto lens 1 has a long focal length and the large aperture. In this way, a depth of field of the telephoto lens 1 is shallow, and during photographing, a center is clear, a background is blurred, and therefore a theme is prominent. Consequently, a special artistic effect is easily achieved. It may be understood that a long equivalent focal length of the telephoto lens 1 needs to match the large aperture, and a shorter equivalent focal length of the telephoto lens 1 needs to match a smaller aperture. If the f-number Fno is very small relative to the equivalent focal length, a luminous flux of the telephoto lens 1 is small. As a result, a photographing effect is affected. If the f-number Fno is very large relative to the equivalent focal length, a range of a clear region in the middle of an image is very small. In other words, a blurring range of a background of the image is very large. As a result, an imaging effect is affected.

For example, the equivalent focal length of the telephoto lens 1 may be greater than or equal to 80 mm and less than or equal to 90 mm. For example, the equivalent focal length of the telephoto lens 1 may be 80 mm, 85 mm, or 90 mm. The f-number Fno of the telephoto lens 1 may satisfy $1.6 < Fno < 1.8$ or $1.8 < Fno \leq 2.0$. For example, the f-number Fno of the telephoto lens 1 may be 1.8 or 1.9. In this embodiment, the equivalent focal length of the telephoto lens 1 belongs to a range of a 90 mm focal length. A depth of field of a lens with a focal length in the range of the 90 mm focal length is shallow, which helps more easily achieve an imaging effect with a clear center and a blurred background. In addition, when the lens with the focal length in the range of the 90 mm focal length is used to photograph a portrait, the face of a person is slightly distorted, and therefore a proportion of the head of the person is approximate to that observed by a human eye. This avoids distortion during portrait photographing at a short distance, and is applicable to portrait photographing. Herein, $1.6 < Fno < 2.0$ is set. In this way, an aperture size of the telephoto lens matches the range of the 90 mm focal length, to achieve a better imaging effect.

For example, the f-number Fno of the telephoto lens 1 may satisfy $1.4 \leq Fno \leq 2.2$. For example, the f-number Fno of the telephoto lens 1 may be 1.4, 1.8, 1.9, or 2.2.

For example, a field of view FOV of the telephoto lens 1 satisfies $15° < FOV \leq 28°$ or $28° < FOV \leq 50°$. For example, the field of view FOV may also be 28°, 30°, 45°, or 50°. In this embodiment, the field of view FOV of the telephoto lens 1 matches the long focal length, the large aperture, and the large target, to obtain the better imaging effect.

In addition, an image height ImgH of the telephoto lens 1 may satisfy $2.5\,mm \leq ImgH \leq 8\,mm$, for example, may be 3.5 mm, 5.5 mm, or 7.5 mm. In this application, the telephoto lens 1 has a small field of view and a large target surface size, to have a strong distant-scene photographing capability and high imaging quality in distant-scene photographing. In this application, photographing at an object distance greater than 100 meters may be considered as distant-scene photographing. For example, a size of the photosensitive element 13 may be 1/3.6 inches, 1/2.5 inches, 1/2 inches, or 1 inch. A corresponding image height ImgH of a 1-inch photosensitive element 13 is 8 mm.

In some embodiments, an effective focal length EFL of the telephoto lens 1 may satisfy $6.94\,mm \leq EFL \leq 9.25\,mm$, $9.25\,mm < EFL \leq 33.28\,mm$, or $33.28\,mm < EFL \leq 37\,mm$. This is not limited in this application. It may be understood that the effective focal length EFL is related to the equivalent focal length and the image height ImgH. In this embodiment, the telephoto lens 1 has the long focal length and the large target surface, and has the better imaging effect.

In some embodiments, the light filter 12 may be located between the telephoto lens 1 and the photosensitive element 13, and is configured to filter out an unnecessary band in a ray, to prevent the photosensitive element 13 from generating a false color or a ripple, so as to improve effective resolution and color reproduction of the photosensitive element 13. For example, the light filter 12 may be an infrared light filter. In this embodiment, the light filter 12 is an independent component. In some other embodiments, a mechanical part, namely, the light filter 12 may be removed. Instead, surface processing or material processing is performed on at least one optical element of the telephoto lens 1, to implement light filtering. A specific embodiment of a mechanical part or structure configured to implement light filtering is not strictly limited in this application.

In some embodiments, the camera module 10 may further include a drive apparatus 15. The drive apparatus 15 is connected to the telephoto lens 1, and moves with the telephoto lens 1 from the compressed state to the pop-up state.

When the telephoto lens 1 is in the pop-up state, the drive apparatus 15 may be configured to control the telephoto lens 1 to move in a direction close to or away from the photosensitive element 13, to implement focusing of the telephoto lens 1. In this application, focusing is implemented by moving a single group of lenses. In this way, a focusing load is small, and a focusing speed is easily ensured.

For example, the drive apparatus 15 may be a focus motor, for example, a voice coil motor (voice coil motor, VCM), a memory metal (shape memory alloy) motor, a ceramic motor (piezo motor), or a stepper motor (stepper motor). In some other embodiments, the drive apparatus 15 may alternatively be a mechanism that can be elastically deformed, for example, a spring. For example, with reference to FIG. 2A and FIG. 2B, when the telephoto lens 1 is in the pop-up state, the spring is not elastically deformed or the spring is slightly deformed, and is in a natural state. When the telephoto lens 1 is in the compressed state, the spring is elastically deformed or a degree of elastic deformation increases, and is in a compressed state. In a process in which the telephoto lens 1 changes from the compressed state to the pop-up state, the degree of elastic deformation of the spring decreases or the spring is restored to the natural state, to generate elastic force. When being driven by the elastic force of the spring, the telephoto lens 1 pops up from the compressed state. In addition, the drive apparatus 15 may alternatively be another structure. This is not limited in this application.

In some embodiments, the camera module 10 may further include an image stabilization motor (not shown in the figure). The image stabilization motor is configured to drive the telephoto lens 1 to move in a direction perpendicular to an optical axis O, or to tilt and rotate relative to an optical axis O. The image stabilization motor may be a memory metal (shape memory alloy) motor, a motor with a suspension wire, a ball motor, or the like.

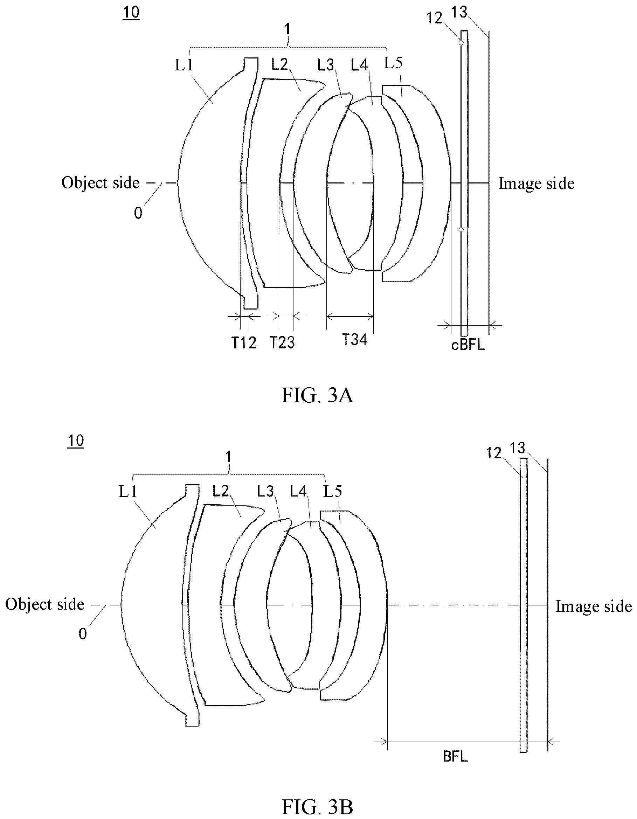

FIG. 3A is a diagram of a part of the structure of the camera module 10 shown in FIG. 2A in the compressed state. FIG. 3B is a diagram of the part of the structure of the camera module 10 shown in FIG. 3A in the pop-up state. FIG. 3A shows a structure of the telephoto lens 1, the light filter 12, and the photosensitive element 13 of the camera module 10, and relative positions of the components.

As shown in FIG. 3A, the telephoto lens 1 may move to be in the compressed state. As shown in FIG. 3B, the telephoto lens 1 may move to be in the pop-up state. When the telephoto lens 1 is in the compressed state, a compressed back focal length cBFL between the telephoto lens 1 and the light filter 12 is small. For example, the compressed back focal length cBFL may be less than 2 mm, for example, may be 1 mm or 1.5 mm. When the telephoto lens 1 is in the compressed state, an overall height of the camera module 10 is small, and the camera module 10 occupies small space in an internal cavity of the entire electronic device 100. This facilitates storage and better use in a thin electronic device. In addition, the compressed back focal length cBFL is set between the telephoto lens 1 and the light filter 12, to avoid damage caused by collision or scraping between the telephoto lens 1 and the light filter 12 when the telephoto lens 1 is in the compressed state. This prolongs a service life of the camera module 10. Factors such as a focusing stroke, a lens support margin, and impact of a temperature need to be considered for the compressed back focal length cBFL. In some other embodiments, when the telephoto lens 1 is in the compressed state, the telephoto lens 1 may alternatively be in contact with the light filter 12. This is not limited in this application.

As shown in FIG. 3B, when the telephoto lens 1 is in the pop-up state, a back focal length BFL between the telephoto lens 1 and the light filter 12 is greater than the compressed back focal length cBFL. In this case, the telephoto lens 1 may be in a distant-scene photographing state, and implement a focusing function. In this embodiment, the back focal length BFL between the telephoto lens 1 and the light filter 12 provides sufficient moving space for the telephoto lens 1, and therefore the telephoto lens 1 can move relative to the photosensitive element 13 to implement the focusing function.

For example, the back focal length BFL of the telephoto lens 1 may satisfy $BFL \geq 4$ mm. In this application, when the telephoto lens 1 is in the pop-up state, the back focal length BFL between the telephoto lens 1 and the light filter 12 is long, so that the telephoto lens 1 has a sufficiently long back focal length BFL. In this way, the back focal length BFL does not need to be considered during design of the telephoto lens 1, the large aperture and the large target surface are more easily implemented, and design difficulty is reduced.

In some embodiments, the telephoto lens 1 may include at least four lenses, for example, may include four, five, six, or seven lenses. The plurality of lenses are disposed at intervals. In a process in which the telephoto lens 1 moves from the compressed state to the pop-up state, or in a process in which the telephoto lens 1 moves from the pop-up state to the compressed state, or in a process in which the telephoto lens 1 focuses during distant-scene photographing, a distance between the plurality of singlet lenses of the telephoto lens 1 does not change. In other words, an effective focal length EFL of the telephoto lens 1 does not change.

A structure in a dashed line in FIG. 3A is a schematic structure of the telephoto lens 1 in some embodiments. The telephoto lens 1 in this application may alternatively have another structure, and the accompanying drawings cannot be considered as a limit on the structure of the telephoto lens 1.

In some embodiments, the telephoto lens 1 may include a first lens L1, a second lens L2, a third lens L3, and a fourth lens L4 that are arranged from an object side to an image side. There is a spacing T12 between the first lens L1 and the second lens L2. There is a spacing T23 between the second lens L2 and the third lens L3. There is a spacing T34 between the third lens L3 and the fourth lens L4. The spacing T34 between the third lens L3 and the fourth lens L4 is the largest one among the spacing T12, the spacing T23, and the spacing T34. In other words, the spacing T12, the spacing T23, and the spacing T34 satisfy T34>T12 and T34>T23. The spacing T34 between the third lens L3 and the fourth lens L4 and a total track length TTL of the telephoto lens 1 satisfy 5<TTL/T34<20. It may be understood that a spacing between two adjacent lenses is a distance between a vertex of an image-side surface of one lens and a vertex of an object-side surface of the other lens. The image-side surface of the lens is opposite to the object-side surface of the other lens. For example, the spacing T34 is a distance between a vertex of an image-side surface of the third lens L3 and a vertex of an object-side surface of the fourth lens L4. In this application, the spacing T34 between the third lens L3 and the fourth lens L4 is greater than the spacing between other adjacent lenses in the four lenses, and 5<TTL/T34<20 is set. In this way, the spacing T34 between the third lens L3 and the fourth lens L4 is short, and consequently a body height of the telephoto lens 1 is small. When the telephoto lens 1 is in the compressed state, an overall height of the camera module 10 is small, and the camera module 10 occupies small space in an internal cavity of an entire electronic device 100. This facilitates storage and better use in a thin electronic device. In this application, the body height of the telephoto lens 1 is a distance between a vertex closest to the object side and a vertex closest to the image side of the telephoto lens 1.

In some embodiments, the spacing T12 between the first lens L1 and the second lens L2 and the total track length TTL of the telephoto lens 1 satisfy 50<TTL/T12<150, and/or the spacing T23 between the second lens L2 and the third lens L3 and the total track length TTL of the telephoto lens 1 satisfy 15<TTL/T23<30. In this application, 50<TTL/T12<150 is set, and/or 15<TTL/T23<30 is set. In this way, the spacing T12 between the first lens L1 and the second lens L2 and/or the spacing T23 between the second lens L2 and the third lens L3 are/is short. This reduces the body height of the telephoto lens 1, and further reduces the compressed height of the camera module 10.

For example, a focal length f1 of the first lens L1 and the spacing T34 between the third lens L3 and the fourth lens L4 satisfy 6<f1/T34<11. In this application, a ratio of the spacing T34 between the third lens L3 and the fourth lens L4 to the focal length f1 of the first lens L1 is short, so that the spacing T34 between the third lens L3 and the fourth lens L4 is short. In this way, the body height of the telephoto lens 1 is small, and consequently a compressed height of the camera module 10 is reduced.

In some embodiments, the telephoto lens 1 may further include one or more lenses located on an image side of the fourth lens L4. For example, as shown in FIG. 3B, the telephoto lens 1 may further include a fifth lens L5 located on the image side of the fourth lens L4. This is not limited in this application.

In some embodiments, a plurality of lenses are used for the telephoto lens 1. Focal power, surface types, dispersion coefficients (Abbe numbers), materials, refractive indexes, on-axis spacings between lenses, and the like of the lenses are appropriately assigned. In this way, the telephoto lens 1 achieves effects such as a small total track length TTL, a long focus, good processability, and high imaging quality.

For example, the telephoto lens 1 may include an image-end lens closest to the image side. As shown in FIG. 3B, the image-end lens corresponds to the fifth lens L5. Focal power of the first lens L1 of the telephoto lens 1 is positive, focal power of the second lens L2 is negative, and focal power of the image-end lens is negative.

In this embodiment, the first lens L1 has positive focal power, and the second lens L2 has negative focal power, so that the body height of the telephoto lens 1 is small. This facilitates miniaturization of the camera module 10. In addition, the second lens L2 and the image-end lens that are located on an image side of the first lens L1 have negative focal power, so that an incident angle of a beam passing through the telephoto lens 1 and being emitted into the photosensitive element 13 can be reduced, and a better imaging effect can be achieved. In addition, the second lens L2 and the image-end lens cooperate with each other to form a positive-negative lens cooperation structure. In this way, problems such as a color difference and aberration can be better resolved, and imaging quality can be improved.

For example, at least one lens whose focal power is positive may be included between the second lens L2 and the image-end lens. The lens is disposed between the second lens L2 and the image-end lens. This increases a specification of the telephoto lens 1 and increases complexity of an optical path to control a transmission path of a ray more accurately, thereby improving the imaging effect. Through appropriate combination of the focal power and surface shapes of the lenses of the optical lens, a low-order aberration of the telephoto lens 1 can be effectively reduced, and tolerance sensitivity is reduced.

For example, as shown in FIG. 3B, focal power of at least one of the third lens L3 and the fourth lens L4 is positive. For example, the third lens L3 has positive focal power, and the fourth lens L4 has negative focal power. Alternatively, the third lens L3 has negative focal power, and the fourth lens L4 has positive focal power. This is not limited in this application.

For example, the plurality of lenses of the telephoto lens 1 may have different dispersion coefficients. Impact of a color difference on image quality can be reduced by designing the dispersion coefficients of the plurality of lenses.

For example, the plurality of lenses of the telephoto lens 1 may be made of a same material, for example, glass or resin. The glass has characteristics of a high refractive index and low expansion, so that the telephoto lens 1 has better imaging quality and a characteristic of low temperature drift. The resin has a low density, so that a weight of the telephoto lens 1 can be reduced. This facilitates movement and improves a focusing capability of the telephoto lens 1. In some other embodiments, at least one lens in the plurality of lenses of the telephoto lens 1 may be made of a material different from that of another lens. This is not limited in this application.

For example, at least one lens in the plurality of lenses of the telephoto lens 1 may be made of glass. For example, the first lens L1 of the telephoto lens 1 may be made of glass, and other lenses may be made of resin. This can not only ensure imaging quality and a characteristic of low temperature drift of the telephoto lens 1, but also can reduce a weight of the telephoto lens 1 and improve the focusing capability of the telephoto lens 1.

For example, the plurality of lenses of the telephoto lens 1 may be processed and shaped by using processes such as plastic injection, mold pressing, and/or polishing and grinding.

In some embodiments, the plurality of lenses of the telephoto lens 1 may be mounted on a lens tube (not shown in the figure). In this application, the plurality of lenses of the telephoto lens 1 are driven to move along an optical axis O, to implement focusing, simplify a movement manner of a focusing structure, and simplify a focusing method.

In some embodiments, the telephoto lens 1 may further include an aperture diaphragm (not shown in the figure). The aperture diaphragm may be mounted on the telephoto lens 1. For example, the aperture diaphragm may be mounted at an end of the telephoto lens 1 close to the object side. In this embodiment, an example in which the aperture diaphragm is mounted on the first lens L1 of the telephoto lens 1 is used for description. In this case, an aperture adjustment effect of the aperture diaphragm is better, and the imaging quality of the telephoto lens 1 can be improved. In some other embodiments, the aperture diaphragm may alternatively be mounted on another lens of the telephoto lens 1 or at another position of the telephoto lens 1. This is not strictly limited in embodiments of this application.

The aperture diaphragm may be an isolated ring structure or a variable blade structure. Alternatively, the aperture diaphragm may be implemented by using a surface spraying process, for example, the aperture diaphragm is formed by spraying a light shielding material on a lens. A position of the aperture diaphragm may be fixed or may be variable. For example, the position of the aperture diaphragm is variable, and the aperture diaphragm may be adjusted based on a focusing case, to be located between different lenses.

In some embodiments, an f-number Fno of the aperture diaphragm satisfies 1.0<Fno<3.0. A smaller f-number Fno indicates a larger luminous flux within a same unit time. In this application, if the f-number Fno is small, a luminous flux of the telephoto lens 1 is large, so that the electronic device 100 performs photographing in a low-luminance environment.

In some embodiments, an optical surface of at least one lens of the telephoto lens 1 is an aspheric surface. The optical surface of an aspheric shape has different focal lengths in a region from a near axis to an outer field of view, so that an imaged picture has more balanced image quality, and/or an optical surface of at least one lens of the telephoto lens may be a free-form curved surface to correct an aberration. The aspheric surface is a surface that is rotationally symmetric around the optical axis O. The free-form curved surface may have no symmetry axis, or may be symmetric in one direction, or may be symmetric in two directions.

In some embodiments, the plurality of lenses of the telephoto lens 1 are assembled by using an active alignment (active alignment, AA) process, to ensure assembly precision.

In some embodiments, an optical surface of at least one lens of the telephoto lens 1 may form a diffraction grating structure. In this embodiment, the diffraction grating structure is appropriately disposed, so that a chromatic aberration can be reduced, and a volume of the telephoto lens 1 can be reduced.

In some embodiments, the telephoto lens 1 may further include a liquid lens (not shown in the figure). The liquid lens may be located between the telephoto lens 1 and the photosensitive element 13, or between adjacent lenses, for example, between the third lens and the fourth lens. In this embodiment, a focus adjustment effect can be enhanced by using a liquid lens, to implement ultra-close photographing. The liquid lens is a mechanical part that uses a liquid as a lens and changes a focal length by changing a curvature of the liquid.

In some embodiments, an irregular-shape technology may be used for at least one lens of the telephoto lens 1 to reduce a size of the telephoto lens 1. In this way, the telephoto lens 1 can be better applicable to the miniaturized electronic device 100, and an application scope of the telephoto lens 1 is increased. A notch may be implemented through an I-CUT process. In addition, because a height of the lens decreases in a notch manner, a large clear aperture may be set for the lens, so that an amount of light admitted through the telephoto lens 1 is increased, and imaging quality of the telephoto lens 1 is better. Alternatively, a special-shape technology may be used for a structural support of a lens, for example, a lens tube or a partition, to reduce a size of the telephoto lens 1.

In some embodiments, a peripheral side surface or a supporting surface of at least one lens of the telephoto lens 1 may be blackened or roughened, to eliminate stray light and improve imaging quality. Blackening may be to coat or plate black ink or another extinction material, or may be to bond a film. Roughening is mainly used to increase roughness. Certainly, in some other embodiments, the telephoto lens 1 may eliminate stray light in another manner. This is not strictly limited in embodiments of this application.

For example, three possible embodiments of the telephoto lens 1 are provided in this application.

In a first embodiment, the telephoto lens 1 includes five lenses. In a second embodiment, the telephoto lens 1 includes six lenses. In a third embodiment, the telephoto lens 1 includes seven lenses. In the foregoing three embodiments, a quantity of lenses included in the telephoto lens 1 increases sequentially, specifications of the telephoto lens 1 also increase sequentially, and imaging quality is improved accordingly.

The following describes a specific structure of the telephoto lens 1 in various possible embodiments with reference to the accompanying drawings and tables.

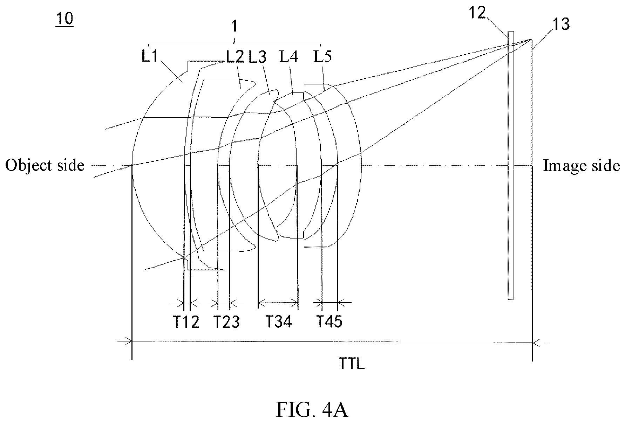

FIG. 4A is a diagram of an optical path obtained when a part of a structure of the camera module 10 focuses on a distant scene according to a first embodiment of this application. FIG. 4A shows a structure of the telephoto lens 1, the light filter 12, and the photosensitive element 13 of the camera module 10, and relative positions of the components. The camera module 10 shown in FIG. 4A includes most technical features of the camera module 10 shown in FIG. 3A. The following mainly describes differences between the two, and most content that is the same between the two is not described again.

In the first embodiment, the telephoto lens 1 includes five lenses. The five lenses include a first lens L1, a second lens L2, a third lens L3, a fourth lens L4, and a fifth lens L5 that are arranged from an object side to an image side. In a direction of an optical axis O, a ray sequentially passes through the first lens L1, the second lens L2, the third lens L3, the fourth lens L4, and the fifth lens L5, then passes through the light filter 12, and finally reaches the photosensitive element 13.

In the first embodiment, the first lens L1 closest to the object side in the five lenses of the telephoto lens 1 is a main lens, and other lenses of the telephoto lens 1 are configured to adjust parameters such as a focal length of the first lens L1, so that the telephoto lens 1 obtains preset optical performance. In this embodiment, the telephoto lens 1 adjusts the main lens by using four lenses. An optical path is simple, design difficulty of each lens is low, and thicknesses of the lenses used for adjustment are large, which facilitates processing. In addition, the body height of the telephoto lens 1 is small, so that the camera module 10 obtains a small compressed height.

As shown in FIG. 4A, when the telephoto lens 1 focuses on the distant scene, rays reflected by a distant-scene object pass through the telephoto lens 1, and then an image is generated on an imaging plane. The imaging plane falls on the photosensitive element 13, so that the camera module 10 can generate a distant-scene image.

With reference to data and a simulation result, the following presents a specific solution of the camera module 10 shown in FIG. 4A according to a possible embodiment.

Table 1a shows a curvature radius, a thickness, a refractive index (Nd), and a dispersion coefficient of each of the lenses and the light filter 12 obtained when the camera module 10 shown in FIG. 4A focuses on a distant scene according to a possible embodiment. The thickness includes a thickness of the lens, and also includes a distance between the lenses. Table 1b and Table 1c show aspheric coefficients of the lenses of the telephoto lens 1 shown in FIG. 4A according to a possible embodiment.

**Table 1a**

| Surface number | Descriptions | Surface type | Curvature radius | Thickness (mm) | Material | Refractive index | Dispersion coefficient |
|---|---|---|---|---|---|---|---|
| STO | Aperture diaphragm | Aspheric surface | Unlimited | 0.03 | | | |
| S1 | First lens | Aspheric surface | 3.8305 | 1.8997 | Resin | 1.54 | 56 |
| S2 | | Aspheric surface | 12.9955 | 0.1959 | | | |
| S3 | Second lens | Aspheric surface | 12.5245 | 1.0016 | Resin | 1.66 | 20.37 |
| S4 | | Aspheric surface | 4.0049 | 0.4244 | | | |
| S5 | Third lens | Aspheric surface | 3.1524 | 1.0167 | Resin | 1.54 | 56 |
| S6 | | Aspheric surface | 3.7099 | 1.4086 | | | |
| S7 | Fourth lens | Aspheric surface | -13.8505 | 0.8939 | Resin | 1.66 | 20.37 |
| S8 | | Aspheric surface | -6.2605 | 0.6158 | | | |
| S9 | Fifth lens | Aspheric surface | -3.5318 | 0.8433 | Resin | 1.54 | 56 |
| S10 | | Aspheric surface | -5.3238 | 5.2947 | | | |

(continued)

| Surface number | Descriptions | Surface type | Curvature radius | Thickness (mm) | Material | Refractive index | Dispersion coefficient |
|---|---|---|---|---|---|---|---|
| S11 | Infrared cut-off filter | Plane | Unlimited | 0.21 | Glass | 1.52 | 64.20 |
| S12 | | Plane | Unlimited | 0.6218 | | | |

**Table 1b**

| Surface number | K | A4 | A6 | A8 | A10 | A12 | A14 |
|---|---|---|---|---|---|---|---|
| S1 | 3.45 | -0.1026 | -0.0304 | -0.0127 | -0.0078 | -0.0042 | -0.002 |
| S2 | 3.2265 | 0.0895 | -0.0058 | -0.0027 | -0.0058 | 0.0014 | -0.0006 |
| S3 | 3.4 | 0.1533 | 0.0042 | 0.0036 | 0.0068 | 0.0048 | 0.0007 |
| S4 | 3.4 | -3.7738 | -3.9406 | -3.4048 | -2.3231 | -1.2973 | -0.5551 |
| S5 | 2.6 | -0.2922 | 0.0688 | 0.0088 | 0.0157 | 0.0048 | 0.0022 |
| S6 | 2.6 | -0.2777 | 0.0011 | -0.01 | -0.0039 | -0.0047 | -0.0021 |
| S7 | 2.4 | -0.6666 | -0.087 | 0.0197 | 0.0225 | 0.0099 | 0.0033 |
| S8 | 2.4 | -0.1339 | -0.0383 | 0.006 | 0.0042 | 0.0003 | 0.0002 |
| S9 | 2.7 | 0.2017 | -0.1511 | -0.0207 | -0.0101 | -0.0045 | -0.0004 |
| S10 | 2.7 | -0.0301 | -0.0568 | -0.0022 | -0.0014 | -0.0005 | -6.6579e-5 |

**Table 1c**

| Surface number | A16 | A18 | A20 |
|---|---|---|---|
| S1 | -0.0009 | -0.0003 | -9.9111e-5 |
| S2 | 0.0003 | -0.0001 | 7.9972e-5 |
| S3 | 0.0008 | 7.9832e-5 | 0.0002 |
| S4 | -0.178 | -0.0383 | -0.0042 |
| S5 | 0.0008 | 0.0003 | 6.9331e-5 |
| S6 | -0.0005 | -4.6044e-7 | 3.7859e-5 |
| S7 | 0.0007 | 1.6262e-5 | -5.0343e-5 |
| S8 | 0.0002 | 5.8082e-5 | 3.8952e-6 |
| S9 | 0.0002 | -8.7836e-5 | -8.2933e-5 |
| S10 | -1.0975e-5 | 2.1086e-5 | -1.8465e-5 |

The aspheric surface of the telephoto lens 1 in Table 1a may be defined by using, but not limited to, the following aspheric curve equation:

$$z = \frac{cr^2}{1 + \sqrt{1 - (1 + k)\ c^2 r^2}} + \sum_{i=1}^{N} \alpha_i r^{2i}$$

Herein, z is a distance that is of a point whose distance from an optical axis is r on the aspheric surface and that is relative to a tangent plane tangent to an intersection point between the aspheric surface and the optical axis, r is a vertical distance between the point on an aspheric curve and the optical axis, c is curvature, K is a conical coefficient, and $\alpha_i$ is an $i^{\text{th}}$-order aspheric coefficient. For details, refer to Table 1b and Table 1c.

Table 1d and Table 1e show basic parameters of the telephoto lens 1 shown in FIG. 4A according to a possible embodiment. Herein, f1 to f5 in Table 1d are focal lengths of the first lens L1 to the fifth lens L5 respectively. A spacing T45 is a spacing between the fourth lens L4 and the fifth lens L5.

**Table 1d**

| Parameter | f1 | f2 | f3 | f4 | f5 | EFL |
|---|---|---|---|---|---|---|
| Value (mm) | 9.2676 | -9.2609 | 23.364 | 16.354 | -23.0445 | 14.6 |

**Table 1e**

| Parameter | TTL | TTL/T12 | TTL/T23 | TTL/T34 | TTL/T45 | Image height | Equivalent focal length | f-number | Field of view |
|---|---|---|---|---|---|---|---|---|---|
| Value | 12.5574 | 64.1 | 29.6 | 8.9 | 20.4 | 3.5 | 90.25 | 1.8 | 28° |

In this embodiment, as shown in Table 1a and Table 1d, the first lens L1 has positive focal power, the second lens L2 has negative focal power, the third lens L3 has positive focal power, the fourth lens L4 has positive focal power, and the fifth lens L5 has negative focal power. Focal power, surface types, dispersion coefficients (Abbe numbers), materials, refractive indexes, on-axis spacings between lenses, and the like of the lenses are appropriately assigned. In this way, the telephoto lens 1 achieves effects such as a small body height, good processability, and high imaging quality.

As shown in Table 1d and Table 1e, when the telephoto lens 1 focuses on a distant scene, an effective focal length EFL of the telephoto lens 1 is 14.6 mm, and a corresponding equivalent focal length is 90.25 mm, which belongs to a range of a 90 mm focal length. An f-number Fno is 1.8, a clear aperture is large, and a luminous flux of the telephoto lens 1 is large, so that the electronic device 100 performs photographing in a low-luminance environment. In addition, the telephoto lens 1 has a long focal length and a large aperture. In this way, a depth of field of the telephoto lens is shallow, and during photographing, a center is clear, a background is blurred, and therefore a theme is prominent. Consequently, a special artistic effect is easily achieved.

TTL/T12=64.1, which satisfies 50<TTL/T12<150; TTL/T23=29.6, which satisfies 15<TTL/T23<30; TTL/T34=8.9, which satisfies 5<TTL/T34<20, and TTL/T45=20.4. In this application, the spacing T12, the spacing T23, the spacing T34, and the spacing T45 are all short, so that the body height of the telephoto lens 1 is small. This reduces a compressed height of the camera module 10. In addition, if a value of the TTL/T34 is the smallest, the spacing T34 is the longest. By limiting the value of TTL/T34, a length of the spacing T34 can be limited, and a total track length TTL is further limited. In this way, the camera module 10 obtains a small compressed height.

Herein, f1/T34=6.58, which satisfies 6<f1/T34<11, and the spacing T34 is short, so that the body height of the telephoto lens 1 is small. This further reduces the compressed height of the camera module 10.

As shown in Table 1e, if an image height is 3.5 mm, the telephoto lens 1 has a large target surface. This increases a pixel value and a photosensitive capability in imaging of the camera module 10, and further improves image quality of the electronic device 100.

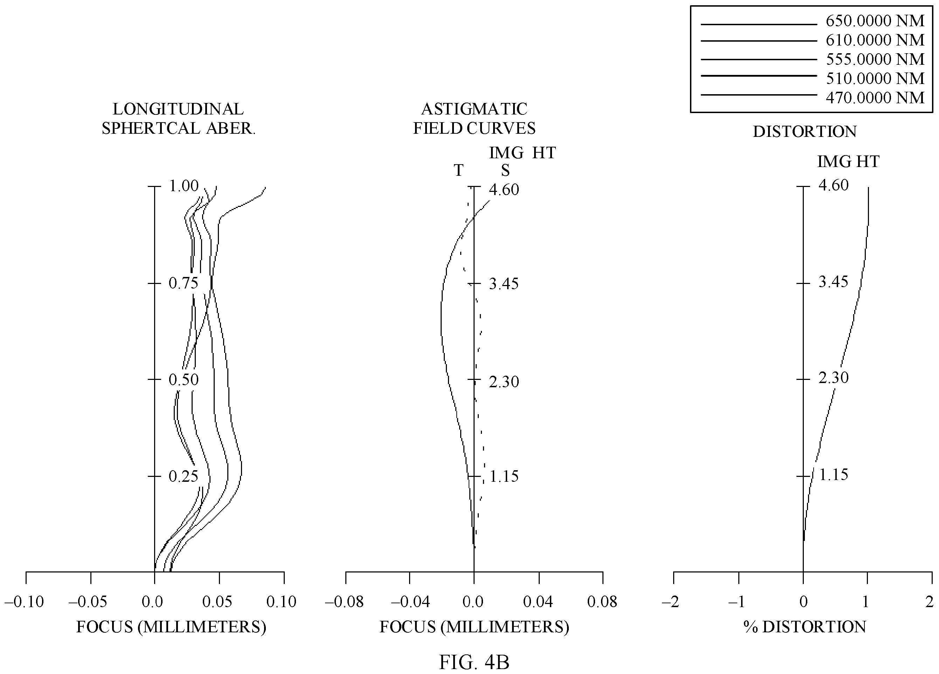

FIG. 4B is a diagram of a simulation effect of the telephoto lens 1 that focuses on a distant scene and that is shown in FIG. 4A; FIG. 4B includes a diagram of an axial chromatic aberration curve, a diagram of astigmatic curvature of field, and a diagram of distortion of the telephoto lens 1. The diagram of the axial chromatic aberration curve includes spherical aberration curves of different bands (650 nm, 610 nm, 555 nm, 510 nm, and 470 nm included in the figure) corresponding to a system. A physical meaning of the curves is a deviation of light of a corresponding wavelength emitted from a 0-degree field of view from an ideal image point after passing through the optical system. A horizontal coordinate of the diagram is a value of a deviation along the optical axis, and a vertical coordinate of the diagram is a normalized coordinate at a pupil. The value shown in FIG. 4B is small. When the lens focuses on the distant scene and a close scene, on-axis aberration (a spherical aberration, a color difference, or the like) correction of the telephoto lens 1 is good. The diagram of the astigmatic curvature of field is used to show deviations between convergence points of pencils in different fields of view and an ideal imaging plane. X is a beam in a sagittal direction, and Y is a beam in a meridian direction. A horizontal coordinate of the diagram is a value of a deviation along the optical axis, and a vertical coordinate of the diagram is a corresponding field of view. When a value of a field of view is excessively large, image quality of the field of view is poor or a high-level aberration exists. As shown in FIG. 4B, the curvature of field is small in both directions, and the system has a good depth of focus. The diagram of distortion represents relative deviations of beam convergence points (actual image heights) from an ideal image height in different fields of view. The distortion shown in FIG. 4B is small. This can ensure that a picture is not obviously distorted.

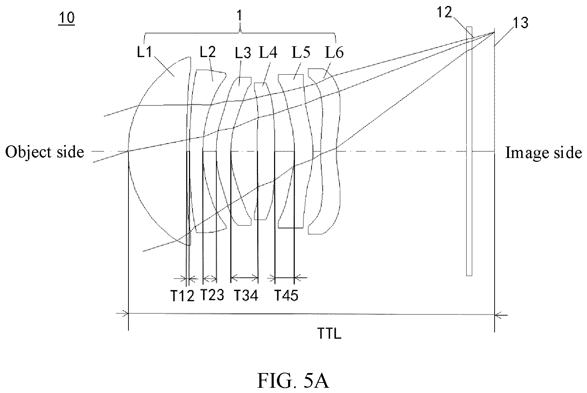

FIG. 5A is a diagram of an optical path obtained when a part of a structure of the camera module 10 focuses on a distant scene according to a second embodiment of this application. FIG. 5A shows a structure of the telephoto lens 1, the light filter 12, and the photosensitive element 13 of the camera module 10, and relative positions of the components. The camera module 10 shown in FIG. 5A includes most technical features of the camera module 10 shown in FIG. 3A. The following mainly describes differences between the two, and most content that is the same between the two is not described again.

In the second embodiment, the telephoto lens 1 includes six lenses. The six lenses include a first lens L1, a second lens L2, a third lens L3, a fourth lens L4, a fifth lens L5, and a sixth lens L6 that are arranged from an object side to an image side. In a direction of an optical axis O, a ray sequentially passes through the first lens L1, the second lens L2, the third lens L3, the fourth lens L4, the fifth lens L5, and the sixth lens L6, then passes through the light filter 12, and finally reaches the photosensitive element 13.

In the second embodiment, the first lens L1 closest to the object side in the six lenses of the telephoto lens 1 is a main lens, and other lenses of the telephoto lens 1 are configured to adjust parameters such as a focal length of the first lens L1, so that the telephoto lens 1 obtains preset optical performance. In this embodiment, the telephoto lens 1 adjusts the main lens by using five lenses. An optical path is simple, design difficulty of each lens is low, and thicknesses of the lenses used for adjustment are large, which facilitates processing. In addition, the body height of the telephoto lens 1 is small, so that the camera module 10 obtains a small compressed height.

As shown in FIG. 5A, when the telephoto lens 1 focuses on the distant scene, rays reflected by a distant-scene object pass through the telephoto lens 1, and then an image is generated on an imaging plane. The imaging plane falls on the photosensitive element 13, so that the camera module 10 can generate a distant-scene image.

With reference to data and a simulation result, the following presents a specific solution of the camera module 10 shown in FIG. 5A according to a possible embodiment.

Table 2a shows a curvature radius, a thickness, a refractive index (Nd), and a dispersion coefficient of each of the lenses and the light filter 12 obtained when the camera module 10 shown in FIG. 5A focuses on a distant scene according to a possible embodiment. The thickness includes a thickness of the lens, and also includes a distance between the lenses. Table 2b and Table 2c show aspheric coefficients of the lenses of the telephoto lens 1 shown in FIG. 5A according to a possible embodiment.

**Table 2a**

| Surface number | Descriptions | Surface type | Curvature radius | Thickness (mm) | Material | Refractive index | Dispersion coefficient |
|---|---|---|---|---|---|---|---|
| STO | Stop | Aspheric surface | Unlimited | 0.03 | | | |
| S1 | First lens | Aspheric surface | 4.0764 | 2.2496 | Resin | 1.54 | 56 |
| S2 | | Aspheric surface | 77.5328 | 0.1060 | | | |
| S3 | Second lens | Aspheric surface | 26.3766 | 0.5016 | Resin | 1.66 | 20.37 |
| S4 | | Aspheric surface | 5.7404 | 0.5170 | | | |
| S5 | Third lens | Aspheric surface | 4.0069 | 0.5661 | Resin | 1.54 | 56 |
| S6 | | Aspheric surface | 3.4396 | 0.9983 | | | |
| S7 | Fourth lens | Aspheric surface | 15.4828 | 0.6754 | Resin | 1.66 | 20.37 |
| S8 | | Aspheric surface | 55.3472 | 0.7763 | | | |
| S9 | Fifth lens | Aspheric surface | -4.3613 | 0.7035 | Resin | 1.54 | 56 |
| S10 | | Aspheric surface | -4.0005 | 0.2946 | | | |
| S11 | Sixth lens | Aspheric surface | 5.3341 | 0.6076 | Resin | 1.54 | 56 |
| S12 | | Aspheric surface | 3.8280 | 5.0 | | | |
| S13 | Light filter | Plane | Unlimited | 0.21 | Glass | 1.52 | 64.20 |
| S14 | | Plane | Unlimited | 0.8643 | | | |

**Table 2b**

| Surface number | K | A4 | A6 | A8 | A10 | A12 | A14 |
|---|---|---|---|---|---|---|---|
| S1 | 3.4500 | -0.0099 | -0.0042 | 0.0031 | 0.0006 | 0.0013 | 0.0004 |
| S2 | 3.2265 | 0.0721 | 0.0046 | 0.0065 | 0.0004 | 0.0008 | 0.0004 |

(continued)

| Surface number | K | A4 | A6 | A8 | A10 | A12 | A14 |
|---|---|---|---|---|---|---|---|
| S3 | 3.4000 | 0.1170 | 0.0053 | 0.0137 | -0.0031 | -0.0003 | 0.0002 |
| S4 | 3.4000 | -3.7027 | -4.0203 | -3.3642 | -2.3312 | -1.2910 | -0.5627 |
| S5 | 2.6000 | -0.3301 | -0.0128 | 0.0222 | -0.0029 | 0.0028 | 0.0000 |
| S6 | 2.6000 | -0.4561 | 0.0060 | 0.0243 | 0.0021 | 0.0045 | 0.0005 |
| S7 | 2.4000 | -0.2701 | -0.0121 | -0.0013 | -0.0010 | 0.0004 | -0.0001 |
| S8 | 2.4000 | -0.2855 | 0.0066 | -0.0046 | 0.0011 | 0.0001 | 0.0000 |
| S9 | 2.7000 | 0.3827 | -0.0642 | -0.0104 | 0.0138 | -0.0019 | -0.0012 |
| S10 | 2.7000 | 0.7201 | -0.0357 | -0.0232 | 0.0160 | -0.0014 | 0.0017 |
| S11 | 2.9000 | -1.3467 | 0.0550 | -0.0600 | 0.0177 | -0.0010 | 0.0036 |
| S12 | 2.9000 | -1.5731 | 0.1030 | -0.0458 | 0.0091 | -0.0031 | 0.0013 |

**Table 2c**

| Surface number | A16 | A18 | A20 |
|---|---|---|---|
| S1 | 0.0004 | 0.0001 | 0.0001 |
| S2 | -0.0001 | -0.0002 | 0.0001 |
| S3 | 0.0003 | 0.0011 | 0.0008 |
| S4 | -0.1777 | -0.0340 | -0.0020 |
| S5 | 0.0004 | -0.0005 | 0.0001 |
| S6 | -0.0001 | -0.0004 | 0.0002 |
| S7 | 0.0002 | -0.0001 | 0.0000 |
| S8 | 0.0001 | -0.0001 | 0.0000 |
| S9 | -0.0015 | -0.0005 | 0.0000 |
| S10 | -0.0009 | 0.0000 | 0.0000 |
| S11 | -0.0018 | 0.0001 | -0.0003 |
| S12 | -0.0006 | 0.0002 | 0.0000 |

The aspheric surface of the telephoto lens 1 in Table 2a may be defined by using, but not limited to, the following aspheric curve equation:

$$z = \frac{cr^2}{1 + \sqrt{1 - (1 + k) \ c^2 r^2}} + \sum_{i=1}^{N} \alpha_i r^{2i}$$

Herein, z is a distance that is of a point whose distance from an optical axis is r on the aspheric surface and that is relative to a tangent plane tangent to an intersection point between the aspheric surface and the optical axis, r is a vertical distance between the point on an aspheric curve and the optical axis, c is curvature, K is a conical coefficient, and $\alpha_i$ is an $i^{th}$-order aspheric coefficient. For details, refer to Table 2b and Table 2c. Table 2d and Table 2e show basic parameters of the telephoto lens 1 shown in FIG. 5A according to a possible embodiment. Herein, f1 to f6 in Table 2d are focal lengths of the first lens L1 to the sixth lens L6 respectively. A spacing T45 is a spacing between the fourth lens L4 and the fifth lens L5.

**Table 2d**

| Parameter | f1 | f2 | f3 | f4 | f5 | f6 | EFL |
|---|---|---|---|---|---|---|---|
| Value (mm) | 7.7947 | -11.1062 | -68.7047 | 32.005 | 52.4305 | -28.9514 | 14.6 |

**Table 2e**

| Parameter | TTL | TTL/T12 | TTL/T23 | TTL/T34 | TTL/T45 | Image height | Equivalent focal length | f-number | Field of view |
|---|---|---|---|---|---|---|---|---|---|
| Value | 11.8209 | 111.5 | 22.9 | 11.8 | 15.2 | 3.5 | 90.25 | 1.8 | 28° |

In this embodiment, as shown in Table 2a and Table 2d, the first lens L1 has positive focal power, the second lens L2 has negative focal power, the third lens L3 has negative focal power, the fourth lens L4 has positive focal power, the fifth lens L5 has positive focal power, and the sixth lens L6 has positive focal power. Focal power, surface types, dispersion coefficients (Abbe numbers), materials, refractive indexes, on-axis spacings between lenses, and the like of the lenses are appropriately assigned. In this way, the telephoto lens 1 achieves effects such as a small body height, good processability, and high imaging quality.

As shown in Table 2d and Table 2e, when the telephoto lens 1 focuses on a distant scene, an effective focal length EFL of the telephoto lens 1 is 14.6 mm, and a corresponding equivalent focal length is 90.25 mm, which belongs to a range of a 90 mm focal length. An f-number Fno is 1.8, a clear aperture is large, and a luminous flux of the telephoto lens 1 is large, so that the electronic device 100 performs photographing in a low-luminance environment. In addition, the telephoto lens 1 has a long focal length and a large aperture. In this way, a depth of field of the telephoto lens 1 is shallow, and during photographing, a center is clear, a background is blurred, and therefore a theme is prominent. Consequently, a special artistic effect is easily achieved.

TTL/T12=111.5, which satisfies 50<TTL/T12<150; TTL/T23=22.9, which satisfies 15<TTL/T23<30; TTL/T34=11.8, which satisfies 5<TTL/T34<20, and TTL/T45=15.2. In this application, the spacing T12, the spacing T23, the spacing T34, and the spacing T45 are all short. This reduces a compressed height of the camera module 10. In addition, if a value of the TTL/T34 is the smallest, the spacing T34 is the longest. By limiting the value of TTL/T34, a length of the spacing T34 can be limited, and a total track length TTL is further limited. In this way, the camera module 10 obtains a small compressed height.

Herein, f1/T34=7.81, which satisfies 6<f1/T34<11, and the spacing T34 is short, so that the body height of the telephoto lens 1 is small. This further reduces the compressed height of the camera module 10.

As shown in Table 2e, if an image height is 3.5 mm, the telephoto lens 1 has a large target surface. This increases a pixel value and a photosensitive capability in imaging of the camera module 10, and further improves image quality of the electronic device 100.

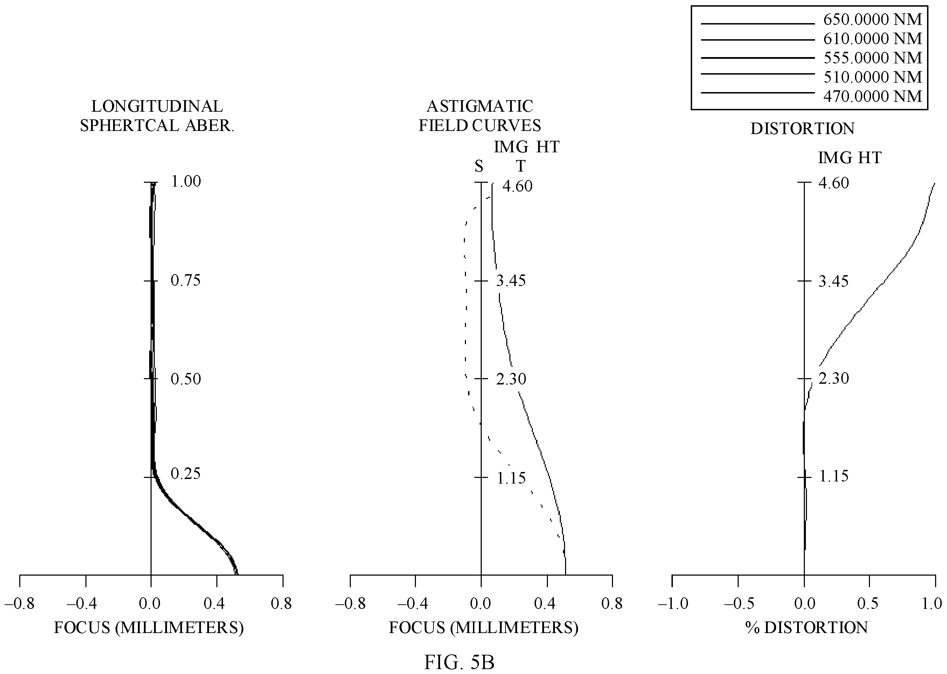

FIG. 5B is a diagram of a simulation effect of the telephoto lens 1 that focuses on a distant scene and that is shown in FIG. 5A;

FIG. 5B includes a diagram of an axial chromatic aberration curve, a diagram of astigmatic curvature of field, and a diagram of distortion of the telephoto lens 1. The diagram of the axial chromatic aberration curve includes spherical aberration curves of different bands (650 nm, 610 nm, 555 nm, 510 nm, and 470 nm included in the figure) corresponding to a system. A physical meaning of the curves is a deviation of light of a corresponding wavelength emitted from a 0-degree field of view from an ideal image point after passing through the optical system. A horizontal coordinate of the diagram is a value of a deviation along the optical axis, and a vertical coordinate of the diagram is a normalized coordinate at a pupil. The value shown in FIG. 5B is small. When the lens focuses on the distant scene and a close scene, on-axis aberration (a spherical aberration, a color difference, or the like) correction of the telephoto lens 1 is good. The diagram of the astigmatic curvature of field is used to show deviations between convergence points of pencils in different fields of view and an ideal imaging plane. X is a beam in a sagittal direction, and Y is a beam in a meridian direction. A horizontal coordinate of the diagram is a value of a deviation along the optical axis, and a vertical coordinate of the diagram is a corresponding field of view. When a value of a field of view is excessively large, image quality of the field of view is poor or a high-level aberration exists. As shown in FIG. 5B, the curvature of field is small in both directions, and the system has a good depth of focus. The diagram of distortion represents relative deviations of beam convergence points (actual image heights) from an ideal image height in different fields of view. The distortion shown in FIG. 5B is small. This can ensure that a picture is not obviously distorted.

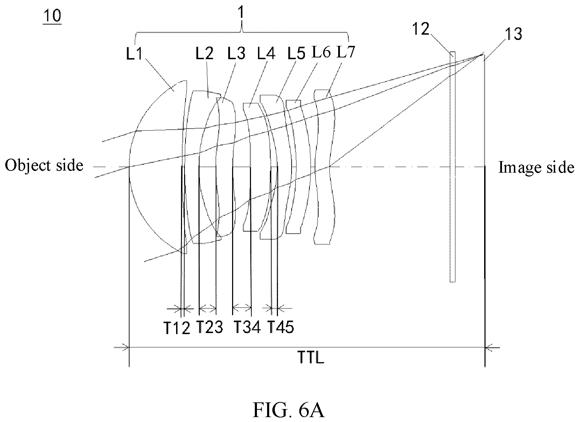

FIG. 6A is a diagram of an optical path obtained when a part of a structure of the camera module 10 focuses on a distant scene according to a third embodiment of this application. FIG. 6A shows a structure of the telephoto lens 1, the light filter 12, and the photosensitive element 13 of the camera module 10, and relative positions of the components. The camera module 10 shown in FIG. 6A includes most technical features of the camera module 10 shown in FIG. 3A. The following mainly describes differences between the two, and most content that is the same between the two is not described again.

In the third embodiment, the telephoto lens 1 includes seven lenses. The six lenses include a first lens L1, a second lens L2, a third lens L3, a fourth lens L4, a fifth lens L5, a sixth lens L6, and a seventh lens L7 that are arranged from an object side to an image side. In a direction of an optical axis O, a ray sequentially passes through the first lens L1, the second lens L2, the third lens L3, the fourth lens L4, the fifth lens L5, and the sixth lens L6, and the seventh lens L7, then passes through the light filter 12, and finally reaches the photosensitive element 13.

In the third embodiment, the first lens L1 closest to the object side in the seven lenses of the telephoto lens 1 is a main lens, and other lenses of the telephoto lens 1 are configured to adjust parameters such as a focal length of the first lens L1, so that the telephoto lens 1 obtains preset optical performance. In this embodiment, the telephoto lens 1 adjusts the main lens by using six lenses. An optical path is complex, and a specification of the telephoto lens 1 is high, to control a transmission path of a ray more accurately, thereby improving the imaging effect. In addition, the body height of the telephoto lens 1 is small, so that the camera module 10 obtains a small compressed height.

As shown in FIG. 6A, when the telephoto lens 1 focuses on the distant scene, rays reflected by a distant-scene object pass through the telephoto lens 1, and then an image is generated on an imaging plane. The imaging plane falls on the photosensitive element 13, so that the camera module 10 can generate a distant-scene image. With reference to data and a simulation result, the following presents a specific solution of the telephoto lens 1 shown in FIG. 6A according to a possible embodiment.

Refer to Table 3a to Table 3c. Table 3a shows a curvature radius, a thickness, a refractive index (Nd), and a dispersion coefficient of each of the lenses and the light filter 12 obtained when the camera module 10 shown in FIG. 6A focuses on a distant scene according to a possible embodiment. The thickness includes a thickness of the lens, and also includes a distance between the lenses. Table 3b and Table 3c show aspheric coefficients of the lenses of the telephoto lens 1 shown in FIG. 6A according to a possible embodiment.

**Table 3a**

| Surface number | Descriptions | Surface type | Curvature radius | Thickness (mm) | Material | Refractive index | Dispersion coefficient |
|---|---|---|---|---|---|---|---|
| OBJ | | Plane | Unlimited | Unlimited | | | |
| STO | Stop | Aspheric surface | Unlimited | 0.03 | | | |
| S1 | First lens | Aspheric surface | 3.9411 | 2.2046 | Resin | 1.54 | 56 |
| S2 | | Aspheric surface | 44.6341 | 0.1021 | | | |
| S3 | Second lens | Aspheric surface | 20.6181 | 0.6 | Resin | 1.66 | 20.37 |
| S4 | | Aspheric surface | 5.63 | 0.6994 | | | |
| S5 | Third lens | Aspheric surface | 7.9482 | 0.6908 | Resin | 1.54 | 56 |
| S6 | | Aspheric surface | 7.2232 | 0.7392 | | | |
| S7 | Fourth lens | Aspheric surface | 848.4547 | 0.8327 | Resin | 1.66 | 20.37 |
| S8 | | Aspheric surface | -31.8810 | 0.2749 | | | |
| S9 | Fifth lens | Aspheric surface | -3.9284 | 0.6 | Resin | 1.54 | 56 |
| S10 | | Aspheric surface | -4.1653 | 0.1863 | | | |
| S11 | Sixth lens | Aspheric surface | -7.3405 | 0.6 | Resin | 1.66 | 20.37 |
| S12 | | Aspheric surface | -7.5741 | 0.1701 | | | |
| S13 | Seventh lens | Aspheric surface | 3.7882 | 0.6 | Resin | 1.66 | 20.37 |
| S14 | | Aspheric surface | 3.2288 | 5 | | | |
| S15 | Light filter | Plane | Unlimited | 0.21 | Glass | 1.52 | 64.20 |
| S16 | | Plane | Unlimited | 1.2186 | | | |

**Table 3b**

| Surface number | K | A4 | A6 | A8 | A10 | A12 | A14 |
|---|---|---|---|---|---|---|---|
| S1 | 3.4500 | -0.0132 | -0.0020 | -0.0016 | -0.0002 | 0.0003 | 0.0003 |
| S2 | 3.2265 | 0.0767 | -0.0059 | 0.0056 | -0.0008 | 0.0007 | 0.0000 |
| S3 | 3.4000 | 0.1189 | 0.0064 | 0.0067 | -0.0097 | 0.0024 | 0.0018 |

(continued)

| Surface number | K | A4 | A6 | A8 | A10 | A12 | A14 |
|---|---|---|---|---|---|---|---|
| S4 | 3.4000 | -3.7081 | -3.9930 | -3.3719 | -2.3359 | -1.2864 | -0.5624 |
| S5 | 2.6000 | -0.3607 | -0.0171 | 0.0181 | -0.0060 | 0.0033 | 0.0007 |
| S6 | 2.6000 | -0.4503 | -0.0084 | 0.0088 | -0.0080 | 0.0036 | -0.0011 |
| S7 | 2.4000 | -0.2970 | 0.0108 | -0.0064 | -0.0049 | 0.0013 | -0.0003 |
| S8 | 2.4000 | -0.2936 | 0.0402 | -0.0086 | -0.0012 | -0.0003 | -0.0002 |
| S9 | 2.7000 | 0.4365 | -0.0636 | -0.0115 | 0.0066 | 0.0009 | 0.0034 |
| S10 | 2.7000 | 0.6935 | -0.0726 | -0.0038 | 0.0035 | -0.0013 | 0.0009 |
| S11 | 2.6880 | 0.0438 | -0.0505 | 0.0112 | 0.0038 | 0.0029 | -0.0022 |
| S12 | 2.6880 | 0.0202 | -0.0026 | -0.0027 | 0.0074 | 0.0018 | -0.0001 |
| S13 | 2.9000 | -1.5286 | 0.1619 | -0.0406 | 0.0175 | -0.0014 | 0.0020 |
| S14 | 2.9000 | -1.7871 | 0.1072 | -0.0511 | 0.0068 | -0.0035 | 0.0007 |

**Table 3c**

| Surface number | A16 | A18 | A20 |
|---|---|---|---|
| S1 | 0.0002 | 0.0001 | 0.0000 |
| S2 | -0.0009 | 0.0003 | 0.0001 |
| S3 | 0.0031 | 0.0032 | 0.0007 |
| S4 | -0.1761 | -0.0341 | -0.0031 |
| S5 | -0.0004 | -0.0002 | 0.0000 |
| S6 | -0.0011 | -0.0003 | 0.0001 |
| S7 | -0.0003 | -0.0002 | 0.0000 |
| S8 | 0.0005 | -0.0002 | 0.0000 |
| S9 | -0.0019 | -0.0018 | 0.0000 |
| S10 | -0.0010 | 0.0000 | 0.0000 |
| S11 | -0.0004 | 0.0004 | 0.0000 |
| S12 | -0.0001 | 0.0003 | 0.0000 |
| S13 | -0.0002 | 0.0002 | -0.0002 |
| S14 | -0.0003 | 0.0001 | 0.0000 |

The aspheric surface of the telephoto lens 1 in Table 3a may be defined by using, but not limited to, the following aspheric curve equation:

$$z = \frac{cr^2}{1 + \sqrt{1 - (1 + k)\ c^2 r^2}} + \sum_{i=1}^{N} \alpha_i r^{2i}$$

Herein, z is a distance that is of a point whose distance from an optical axis is r on the aspheric surface and that is relative to a tangent plane tangent to an intersection point between the aspheric surface and the optical axis, r is a vertical distance between the point on an aspheric curve and the optical axis, c is curvature, K is a conical coefficient, and $\alpha_i$ is an $i^{th}$-order aspheric coefficient. For details, refer to Table 3b and Table 3c.

Table 3d and Table 3e show basic parameters of the telephoto lens 1 shown in FIG. 6A according to a possible embodiment. Herein, f1 to f7 in Table 3d are focal lengths of the first lens L1 to the seventh lens L7 respectively. A spacing T45 is a spacing between the fourth lens L4 and the fifth lens L5.

**Table 3d**

| Parameter | f1 | f2 | f3 | f4 | f5 | f6 | f7 | EFL |
|---|---|---|---|---|---|---|---|---|
| Value (mm) | 7.7674 | -11.7984 | -218.5796 | 46.0756 | -1201.1259 | 1.2805e4 | -57.4205 | 14.6 |

**Table 3e**

| Parameter | TTL | TTL/T12 | TTL/T23 | TTL/T34 | TTL/T45 | Image height | Equivalent focal length | f-number | Field of view |
|---|---|---|---|---|---|---|---|---|---|
| Value | 12.524 | 122.7 | 17.9 | 16.9 | 45.6 | 3.5 | 90.25 | 1.8 | 28° |

In this embodiment, as shown in Table 3a and Table 3c, the first lens L1 has positive focal power, the second lens L2 has negative focal power, the third lens L3 has negative focal power, the fourth lens L4 has positive focal power, the fifth lens L5 has negative focal power, the sixth lens L6 has positive focal power, and the seventh lens L7 has positive focal power. Focal power, surface types, dispersion coefficients (Abbe numbers), materials, refractive indexes, on-axis spacings between lenses, and the like of the lenses are appropriately assigned. In this way, the telephoto lens 1 achieves effects such as a small body height, good processability, and high imaging quality.

As shown in Table 3d and Table 3e, when the telephoto lens 1 focuses on a distant scene, an effective focal length EFL of the telephoto lens 1 is 14.6 mm, and a corresponding equivalent focal length is 90.25 mm, which belongs to a range of a 90 mm focal length. An f-number Fno is 1.8, a clear aperture is large, and a luminous flux of the telephoto lens 1 is large, so that the electronic device 100 performs photographing in a low-luminance environment. In addition, the telephoto lens 1 has a long focal length and a large aperture. In this way, a depth of field of the telephoto lens 1 is shallow, and during photographing, a center is clear, a background is blurred, and therefore a theme is prominent. Consequently, a special artistic effect is easily achieved.

TTL/T12=122.7, which satisfies 50<TTL/T12<150; TTL/T23=17.9, which satisfies 15<TTL/T23<30; TTL/T34=16.9, which satisfies 5<TTL/T34<20, and TTL/T45=45.6. In this application, the spacing T12, the spacing T23, the spacing T34, and the spacing T45 are all short. This reduces a compressed height of the camera module 10. In addition, if a value of the TTL/T34 is the smallest, the spacing T34 is the longest. By limiting the value of TTL/T34, a length of the spacing T34 can be limited, and a total track length TTL is further limited. In this way, the camera module 10 obtains a small compressed height.

Herein, f1/T34=10.5, which satisfies 6<f1/T34<11, and the spacing T34 is short, so that the body height of the telephoto lens 1 is small. This further reduces the compressed height of the camera module 10.

As shown in Table 3e, if an image height is 3.5 mm, the telephoto lens 1 has a large target surface. This increases a pixel value and a photosensitive capability in imaging of the camera module 10, and further improves image quality of the electronic device 100.

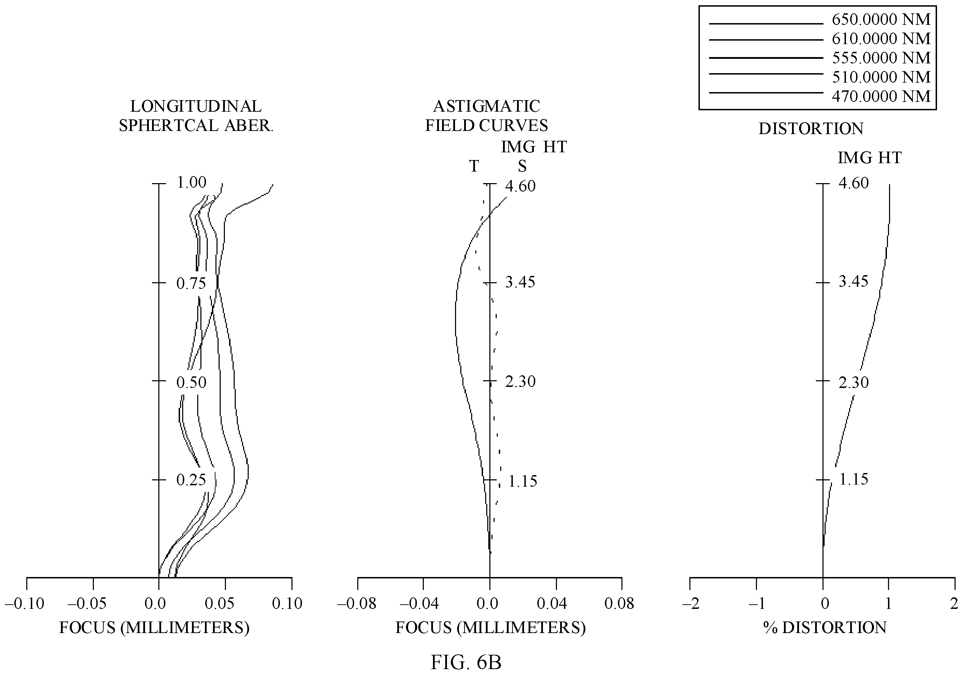

FIG. 6B is a diagram of a simulation effect of the telephoto lens 1 that focuses on a distant scene and that is shown in FIG. 6A.

FIG. 6B includes a diagram of an axial chromatic aberration curve, a diagram of astigmatic curvature of field, and a diagram of distortion of the telephoto lens 1. The diagram of the axial chromatic aberration curve includes spherical aberration curves of different bands (650 nm, 610 nm, 555 nm, 510 nm, and 470 nm included in the figure) corresponding to a system. A physical meaning of the curves is a deviation of light of a corresponding wavelength emitted from a 0-degree field of view from an ideal image point after passing through the optical system. A horizontal coordinate of the diagram is a value of a deviation along the optical axis, and a vertical coordinate of the diagram is a normalized coordinate at a pupil. The value shown in FIG. 6B is small. When the lens focuses on the distant scene and a close scene, on-axis aberration (a spherical aberration, a color difference, or the like) correction of the telephoto lens 1 is good. The diagram of the astigmatic curvature of field is used to show deviations between convergence points of pencils in different fields of view and an ideal imaging plane. X is a beam in a sagittal direction, and Y is a beam in a meridian direction. A horizontal coordinate of the diagram is a value of a deviation along the optical axis, and a vertical coordinate of the diagram is a corresponding field of view. When a value of a field of view is excessively large, image quality of the field of view is poor or a high-level aberration exists. As shown in FIG. 6B, the curvature of field is small in both directions, and the system has a good depth of focus. The diagram of distortion represents relative deviations of beam convergence points (actual image heights) from an ideal image height in different fields of view. The distortion shown in FIG. 6B is small. This can ensure that a picture is not obviously distorted.

In conclusion, the foregoing embodiments are merely intended for describing the technical solutions of this application, but not for limiting this application. Although this application is described in detail with reference to the foregoing embodiments, a person of ordinary skill in the art should understand that they may still make modifications to the technical solutions described in the foregoing embodiments or make equivalent replacements to some technical features thereof, without departing from the scope of the technical solutions of embodiments of this application. In a case that no conflict occurs, embodiments of this application and the features in the embodiments may be mutually combined.

**Claims**

1. A telephoto lens, comprising a first lens, a second lens, a third lens, and a fourth lens that are arranged from an object side to an image side, wherein there is a spacing T12 between the first lens and the second lens, there is a spacing T23 between the second lens and the third lens, there is a spacing T34 between the third lens and the fourth lens, the spacing T12, the spacing T23, and the spacing T34 satisfy T34>T12 and T34>T23, and a total track length TTL of the telephoto lens and the spacing T34 satisfy 5<TTL/T34<20.

2. The telephoto lens according to claim 1, wherein a focal length f1 of the first lens and the spacing T34 satisfy 6<f1/T34<11.

3. The telephoto lens according to claim 1 or 2, wherein the total track length TTL of the telephoto lens and the spacing T12 satisfy 50<TTL/T12<150; and/or
the total track length TTL of the telephoto lens and the spacing T23 satisfy 15<TTL/T23<30.

4. The telephoto lens according to any one of claims 1 to 3, wherein an equivalent focal length of the telephoto lens is greater than or equal to 60 mm and less than or equal to 100 mm, and an f-number Fno of the telephoto lens satisfies $1.0 \leq Fno \leq 2.8$.

5. The telephoto lens according to claim 4, wherein the equivalent focal length of the telephoto lens is greater than or equal to 80 mm and less than or equal to 90 mm, and the f-number Fno of the telephoto lens satisfies $1.6 \leq Fno \leq 1.8$ or $1.8 < Fno \leq 2.0$.

6. The telephoto lens according to any one of claims 1 to 5, wherein an image height ImgH of the telephoto lens satisfies $2.5 \, mm \leq ImgH \leq 8 \, mm$.

7. The telephoto lens according to any one of claims 1 to 6, wherein an effective focal length EFL of the telephoto lens satisfies $6.94 \, mm \leq EFL \leq 9.25 \, mm$, $9.25 \, mm < EFL \leq 33.28 \, mm$, or $33.28 \, mm < EFL \leq 37 \, mm$.

8. The telephoto lens according to any one of claims 1 to 7, wherein a field of view FOV of the telephoto lens satisfies $15° < FOV \leq 28°$ or $28° < FOV \leq 50°$.

9. The telephoto lens according to any one of claims 1 to 8, wherein a back focal length BFL of the telephoto lens satisfies $BFL \geq 4 \, mm$.

10. The telephoto lens according to any one of claims 1 to 9, wherein the telephoto lens comprises an image-end lens closest to the image side, focal power of the first lens is positive, focal power of the second lens is negative, focal power of the image-end lens is negative, and at least one lens whose focal power is positive is comprised between the second lens and the image-end lens.

11. The telephoto lens according to claim 10, wherein the telephoto lens further comprises a fifth lens located on an image side of the fourth lens, the fifth lens is the image-end lens, focal power of the third lens is positive, and focal power of the fourth lens is positive.

12. The telephoto lens according to claim 10, wherein the telephoto lens further comprises a fifth lens and a sixth lens that are located on an image side of the fourth lens, the sixth lens is the image-end lens, focal power of the third lens is negative, focal power of the fourth lens is positive, and focal power of the fifth lens is positive.

13. The telephoto lens according to claim 10, wherein the telephoto lens further comprises a fifth lens, a sixth lens, and a seventh lens that are located on an image side of the fourth lens, the seventh lens is the image-end lens, focal power of the third lens is negative, focal power of the fourth lens is positive, focal power of the fifth lens is negative, and focal power of the sixth lens is positive.

14. The telephoto lens according to any one of claims 1 to 13, wherein the telephoto lens further comprises an aperture diaphragm, and the aperture diaphragm is mounted on the first lens.

15. The telephoto lens according to any one of claims 1 to 14, wherein an optical surface of at least one lens of the telephoto lens is an aspheric surface.

16. The telephoto lens according to any one of claims 1 to 15, wherein the optical surface of the at least one lens of the telephoto lens forms a diffraction grating structure.

17. A camera module, comprising a photosensitive element and the telephoto lens according to any one of claims 1 to 16, wherein the photosensitive element is located on an image side of the telephoto lens; the telephoto lens has a compressed state and a pop-up state; when the telephoto lens is in the compressed state, the telephoto lens has a compressed total track length cTTL; when the telephoto lens is in the pop-up state, the telephoto lens has a total track length TTL; and the compressed total track length cTTL and the total track length TTL satisfy $0.5 \leq cTTL/TTL \leq 1$.

18. The camera module according to claim 17, wherein a size of the photosensitive element is 1/3.6 inches, 1/2.5 inches, 1/2 inches, or 1 inch.

19. The camera module according to claim 17 or 18, wherein the camera module further comprises a pop-up apparatus and a housing, the telephoto lens is movably mounted on the housing, and the pop-up apparatus is configured to drive the telephoto lens to move relative to the housing, to switch the telephoto lens between the compressed state and the pop-up state.

20. An electronic device, comprising an image processor and the camera module according to any one of claims 17 to 19, wherein the image processor is communicatively connected to the camera module, and the image processor is configured to: obtain an image signal from the camera module and process the image signal.

FIG. 1

10

Object side

FIG. 2A

10

Object side

FIG. 2B

FIG. 3A

FIG. 3B

FIG. 4A

LONGITUDINAL
SPHERTCAL ABER.

ASTIGMATIC
FIELD CURVES

DISTORTION

650.0000 NM
610.0000 NM
555.0000 NM
510.0000 NM
470.0000 NM

IMG HT

IMG HT

T    S

1.00

4.60

4.60

0.75

3.45

3.45

0.50

2.30

2.30

0.25

1.15

1.15

−0.10  −0.05  0.0  0.05  0.10

FOCUS (MILLIMETERS)

−0.08  −0.04  0.0  0.04  0.08

FOCUS (MILLIMETERS)

−2  −1  0  1  2

% DISTORTION

FIG. 4B

FIG. 5A

FIG. 5B

FIG. 6A

FIG. 6B

## INTERNATIONAL SEARCH REPORT

| International application No. |
| --- |
| **PCT/CN2023/084769** |

**A.    CLASSIFICATION OF SUBJECT MATTER**

G02B 13/18(2006.01)i

According to International Patent Classification (IPC) or to both national classification and IPC

**B.    FIELDS SEARCHED**

Minimum documentation searched (classification system followed by classification symbols)

IPC:G02B 9, G02B 13

Documentation searched other than minimum documentation to the extent that such documents are included in the fields searched

Electronic data base consulted during the international search (name of data base and, where practicable, search terms used)

CNABS; CNTXT; VEN; WPABS; ENTXT: 长焦, 视场角, 视场范围, 后焦, 收纳, 弹出, 工作, HFOV, FOV, BFL, field+, view +, back+, focal+, length+, telephoto+, long+, focus+, storag+, work+

**C.    DOCUMENTS CONSIDERED TO BE RELEVANT**

| Category* | Citation of document, with indication, where appropriate, of the relevant passages | Relevant to claim No. |
| --- | --- | --- |
| X | CN 112965214 A (GUANGDONG OPPO MOBILE COMMUNICATIONS CO., LTD.) 15 June 2021 (2021-06-15)<br>description, paragraphs 33-131, and figures 1-21 | 1, 4, 6-20 |
| X | CN 213986993 U (JIANGXI JINGCHAO OPTICAL CO., LTD.) 17 August 2021 (2021-08-17)<br>description, paragraphs 3-163, and figures 1-28 | 1-8, 10-16 |
| X | CN 113156614 A (ZHEJIANG SUNNY OPTICS CO., LTD.) 23 July 2021 (2021-07-23)<br>description, paragraphs 50-201, and figures 1-16d | 1-2, 4-8, 14-16 |
| X | CN 215297805 U (ZHEJIANG SUNNY OPTICS CO., LTD.) 24 December 2021 (2021-12-24)<br>description, paragraphs 54-201, and figures 1-32 | 1, 6-9, 14-16 |
| A | CN 113552706 A (GUANGDONG OPPO MOBILE COMMUNICATIONS CO., LTD.) 26 October 2021 (2021-10-26)<br>entire document | 1-20 |
| A | US 4134645 A (ASAHI OPTICAL CO., LTD.) 16 January 1979 (1979-01-16)<br>entire document | 1-20 |

☐ Further documents are listed in the continuation of Box C.      ☑ See patent family annex.

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
| --- | --- |
| **26 June 2023** | **03 July 2023** |

| Name and mailing address of the ISA/CN | Authorized officer |
| --- | --- |
| **China National Intellectual Property Administration (ISA/ CN)**<br>**China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**
Information on patent family members

International application No.

**PCT/CN2023/084769**

| Patent document cited in search report | | | Publication date (day/month/year) | Patent family member(s) | Publication date (day/month/year) |
|---|---|---|---|---|---|
| CN | 112965214 | A | 15 June 2021 | None | |
| CN | 213986993 | U | 17 August 2021 | None | |
| CN | 113156614 | A | 23 July 2021 | None | |
| CN | 215297805 | U | 24 December 2021 | None | |
| CN | 113552706 | A | 26 October 2021 | None | |
| US | 4134645 | A | 16 January 1979 | None | |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202210334478